(19) Europäisches Patentamt
European Patent Office
Office européen des brevets

(11) **EP 4 421 121 A1**

(12) **EUROPEAN PATENT APPLICATION**

(43) Date of publication:
**28.08.2024 Bulletin 2024/35**

(21) Application number: **24157707.1**

(22) Date of filing: **14.02.2024**

(51) International Patent Classification (IPC):
**C08L 53/02** *(2006.01)*       **C08L 95/00** *(2006.01)*

(52) Cooperative Patent Classification (CPC):
(C-Sets available)
**C08L 95/00; C08L 53/02;** C08L 2555/84       (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023   JP 2023027608**
**08.12.2023   JP 2023207371**

(71) Applicant: **Asahi Kasei Kabushiki Kaisha Tokyo 1000006 (JP)**

(72) Inventors:
• **SHIROMOTO, Takayuki**
  **Tokyo, 1000006 (JP)**
• **KONDO, Tomohiro**
  **Tokyo, 1000006 (JP)**

(74) Representative: **Strehl Schübel-Hopf & Partner Maximilianstrasse 54**
**80538 München (DE)**

Remarks:
A request for correction of the claims has been filed pursuant to Rule 139 EPC. A decision on the request will be taken during the proceedings before the Examining Division (Guidelines for Examination in the EPO, A-V, 3.).

(54) **BLOCK COPOLYMER, ASPHALT COMPOSITION, AND MODIFIED ASPHALT MIXTURE**

(57)     [Technical Problem]
An object of the present invention is to provide a block copolymer that, when added to an asphalt, can improve the dispersibility of a fine particle in an asphalt composition containing a fine particle aggregate, thereby improving the strength of a modified asphalt mixture.
[Solution to Problem]
Provided is a block copolymer that can yield an asphalt composition having good dispersibility of a fine particle aggregate and yield a modified asphalt mixture having excellent strength. A block copolymer (P) comprising a polymer block (A) mainly composed of a vinyl aromatic monomer unit and a polymer block (B) mainly composed of a conjugated diene monomer unit, the block copolymer (P) satisfying the following <condition (1)> to <condition (3)>:
<Condition (1)>
a 5% by mass toluene solution viscosity at 25°C is 5 mPa·s or more and 45 mPa·s or less;
<Condition (2)>
a content of a magnesium element is 1 to 200 ppm;
<Condition (3)>
a content of a calcium element is 100 to 500 ppm.

EP 4 421 121 A1

(52) Cooperative Patent Classification (CPC): (Cont.)

C-Sets
**C08L 53/02, C08K 3/105, C08K 3/105;**
**C08L 95/00, C08L 53/02, C08K 3/105,**
**C08K 3/105**

**Description**

Technical Field

The present invention relates to a block copolymer, an asphalt composition, and a modified asphalt mixture.

Description of the Related Art

A block copolymer is widely utilized for an asphalt composition.

In the technical field of an asphalt composition, an asphalt composition to which various block copolymers are added as modifiers is widely utilized in order to add performance properties according to various uses such as road pavement, a sound insulation sheet, and asphalt roofing.

As such a block copolymer as a modifier, for example, a block copolymer containing a conjugated diene monomer unit and a vinyl aromatic monomer unit is known.

Specifically, a technique for improving various properties of an asphalt by adding a block copolymer having a specific structure to the asphalt has been disclosed (see, for example, patent literatures 1 and 2).

Citation List

Patent Literature

   [Patent Literature 1] Japanese Patent Laid-Open No. 9-12898
   [Patent Literature 2] Japanese Patent Laid-Open No. 2004-59781)

Summary of Invention

Technical Problem

In recent years, an aggregate such as a stone to be used in road construction have often been reused from an aggregate that has once been used for pavement. Because of this, in the process of reusing an aggregate, the 50% median diameter is about 20 $\mu$m, and a large number of fine particles are present. In view of these circumstances, in recent years, an asphalt composition and a modified asphalt mixture that more efficiently achieve the dispersion and agglomeration of a fine particle and achieve a road having higher strength than the asphalt compositions disclosed in Japanese Patent Laid-Open No. 9-12898 and Japanese Patent Laid-Open No. 2004-59781 above have been desired.

In addition, when the dissolution rate of a block copolymer in an asphalt or the dispersion rate of an aggregate in an asphalt is high, this contributes to the reduction of energy during the production of an asphalt composition or a modified asphalt mixture, and thus such a block copolymer has been desired.

Therefore, an object of the present invention is to provide a block copolymer that, when added to an asphalt, can improve the dispersibility of a fine particle in an asphalt composition containing a fine particle aggregate, thereby improving the strength of a modified asphalt mixture.

Solution to Problem

The present inventors have carried out diligent studies to solve the above problem, and as a result, found that the problem of the conventional technology described above can be solved by using a block copolymer having a specified viscosity, content of the magnesium element, and content of the calcium element, and completed the present invention.

That is, the present invention is as follows.

   [1] A block copolymer (P) comprising a polymer block (A) mainly composed of a vinyl aromatic monomer unit and a polymer block (B) mainly composed of a conjugated diene monomer unit, the block copolymer (P) satisfying the following <condition (1)> to <condition (3)>:

      <Condition (1)>
      a 5% by mass toluene solution viscosity at 25°C is 5 mPa·s or more and 45 mPa·s or less;
      <Condition (2)>
      a content of a magnesium element is 1 to 200 ppm;

<Condition (3)>
a content of a calcium element is 100 to 500 ppm.

[2] The block copolymer (P) according to [1], wherein the block copolymer is a hydrogenated product.
[3] The block copolymer (P) according to [1] or [2], wherein a mass proportion (TS) of the vinyl aromatic monomer unit is 20% by mass or more and 60% by mass or less.
[4] The block copolymer (P) according to any one of [1] to [3], wherein a vinyl bond content derived from a conjugated diene is 9% by mass or more and 50% by mass or less.
[5] The block copolymer (P) according to any one of [1] to [4], wherein a mass proportion (BS) of the polymer block (A) calculated by the following expression (I) is 10% by mass or more and 40% by mass or less:

$$BS = (mass\ of\ polymer\ block\ (A)/mass\ of\ block\ copolymer$$

$$(P)) \times 100 \quad (I).$$

[6] The block copolymer (P) according to any one of [1] to [5], wherein the polymer block (B) is a polymer block (C) consisting of the vinyl aromatic monomer unit and the conjugated diene monomer unit, and a mass proportion (RS) of the vinyl aromatic monomer unit in the polymer block (C) calculated by the following expression (II) is 3% by mass or more and less than 50% by mass:

$$RS = (TS - BS)/(100 - BS) \times 100 \quad (II)$$

wherein TS represents a mass proportion of the vinyl aromatic monomer unit in the block copolymer (P), and BS represents a mass proportion of the polymer block (A) in the block copolymer (P).
[7] The block copolymer (P) according to any one of [1] to [6], wherein

the block copolymer is a hydrogenated product,
the polymer block (B) is a polymer block (C) consisting of the vinyl aromatic monomer unit and the conjugated diene monomer unit, and
a mass proportion (RS) of the vinyl aromatic monomer unit in the polymer block (C) calculated by the following expression (II) is 3% by mass or more and less than 50% by mass:

$$RS = (TS - BS)/(100 - BS) \times 100 \quad (II)$$

wherein TS represents a mass proportion of the vinyl aromatic monomer unit in the block copolymer (P), and BS represents a mass proportion of the polymer block (A) in the block copolymer (P).

[8] The block copolymer (P) according to any one of [1] to [7], wherein a weight average molecular weight is 50,000 or more and 500,000 or less.
[9] The block copolymer (P) according to any one of [1] to [8], wherein
a separability according to ASTM D5976 in a mixture of

4 parts by mass of the block copolymer (P) and
96 parts by mass of an asphalt in which in composition analysis of the asphalt according to a TLC-FID JPI method (JPI-5S-70), per 100% by mass in total of a saturate, an aromatic, a resin, and an asphaltene, a total amount of the resin and the asphaltene is 30% by mass or more is 5°C or less.

[10] The block copolymer (P) according to any one of [1] to [9], wherein a hydrogenation rate of a double bond in the conjugated diene monomer unit is 95 mol% or less.
[11] The block copolymer (P) according to any one of [1] to [10], wherein a hydrogenation rate of a double bond in the conjugated diene monomer unit is 10 mol% or more.
[12] An asphalt composition comprising:

100 parts by mass of an asphalt; and
0.5 parts by mass or more and 30 parts by mass or less of the block copolymer (P) according to any one of [1] to [11] .

[13] An asphalt composition comprising:

100 parts by mass of an asphalt; and
0.5 parts by mass or more and 30 parts by mass or less of the block copolymer (P) according to any one of [1] to [11], wherein
in composition analysis of the asphalt according to a TLC-FID JPI method (JPI-5S-70), per 100% by mass in total of a saturate, an aromatic, a resin, and an asphaltene, a total amount of the resin and the asphaltene is 30% by mass or more.

[14] The asphalt composition according to [12] or [13], wherein the asphalt composition comprises 0.01 to 10 parts by mass of a crosslinking agent per 100 parts by mass of the asphalt.
[15] The asphalt composition according to any one of [12] to [14], wherein the asphalt composition comprises 0.05 to 10 parts by mass of an additive comprising sulfur and silicon per 100 parts by mass of the asphalt.
[16] A modified asphalt mixture comprising:

3 parts by mass or more and 15 parts by mass or less of the asphalt composition according to any one of [12] to [15]; and
100 parts by mass of an aggregate.

Advantageous Effects of Invention

According to the present invention, it is possible to provide a block copolymer that, when added to an asphalt, can improve the dispersibility of a fine particle in an asphalt composition containing a fine particle aggregate, thereby yielding a modified asphalt mixture having excellent strength.

Description of Embodiment

Hereinafter, an embodiment for carrying out the present invention (hereinafter, referred to as "the present embodiment") will be described in detail.
The present embodiment below is an illustration for describing the present invention, and is not intended to limit the present invention to the following contents. The present invention can be carried out by being modified in various ways within the scope of the gist thereof.
As used herein, the "monomer unit" refers to a constitutional unit constituting a block copolymer, and the "monomer" refers to a material constituting a block copolymer.
In addition, as used herein, "mainly composed of" means that the content of a predetermined monomer unit in the polymer block (A) or the polymer block (B) is 50% by mass or more.
The polymer block (A) mainly composed of a vinyl aromatic monomer unit may have a vinyl aromatic monomer unit content of 50% by mass or more, preferably 70% by mass, more preferably 90% by mass or more, and further preferably 100% by mass.
The polymer block (B) mainly composed of a conjugated diene monomer unit may have a conjugated diene monomer unit content of 50% by mass or more, preferably 70% by mass, more preferably 90% by mass or more, and further preferably 100% by mass.
As used herein, "dissolution stability" means that the block copolymer or the fine particle having a 50% median diameter of about 20 $\mu$m dissolved in an asphalt is in a stable dispersion state while dissolved.
As used herein, "high softening point properties" refers to the nature of the softening point of the asphalt composition being high.
"Heat resistance stability" refers to the nature of the properties of the asphalt composition being high, for example when stored under high temperature conditions (for example, 160 to 180°C) for a long period of time (for example, about one week).
"Elongation recovery" refers to the nature of the asphalt composition returning to the shape before stretching after stretched.
"Low melt viscosity" refers to the nature of the melt viscosity of the asphalt composition being low.
"Low temperature elongation properties" refers to the nature of the elongation of the asphalt composition at a low temperature (for example, 0 to 15°C) being high. It is considered that when a road is paved with a modified asphalt mixture in which the asphalt composition has the performance property of being easily elongated at a low temperature, the modified asphalt mixture is effective in suppressing a crack.

"Dynamic stability" refers to the nature of deformation being unlikely to occur when a stress is applied to a modified asphalt mixture obtained by mixing an asphalt composition with an aggregate.

"Water resistance" refers to the nature of stripping being unlikely to occur when a stress is applied in water to a modified asphalt mixture obtained by mixing an asphalt composition with an aggregate.

"Compatibility" refers to compatibility between an asphalt and the block copolymer (P) of the present embodiment.

[Block copolymer (P)]

The block copolymer (P) of the present embodiment is a block copolymer containing a polymer block (A) mainly composed of a vinyl aromatic monomer unit and a polymer block (B) mainly composed of a conjugated diene monomer unit and satisfies the following <condition (1)> to <condition (3)>.

<Condition (1)>
a 5% by mass toluene solution viscosity at 25°C is 5 mPa·s or more and 45 mPa·s or less.
<Condition (2)>
a content of a magnesium element is 1 ppm or more and 200 ppm or less.
<Condition (3)>
a content of a calcium element is 100 ppm or more and 500 ppm or less.

By using the block copolymer (P) having the above constitution, an asphalt composition having excellent dissolution stability and solubility can be obtained.

The block copolymer (P) of the present embodiment is preferably for asphalt modification or for a viscous adhesive composition.

(Polymer block (A))

The block copolymer (P) of the present embodiment includes a polymer block (A) mainly composed of a vinyl aromatic monomer unit.

The vinyl aromatic monomer unit is formed by a vinyl aromatic compound, and examples of the vinyl aromatic compound include, but are not limited to, styrene, α-methylstyrene, p-methylstyrene, divinylbenzene, 1,1-diphenylethylene, N,N-dimethyl-p-aminoethylstyrene, or N,N-diethyl-p-aminoethylstyrene. Among these, styrene is preferable from the viewpoint of easy production of the block copolymer (P).

The vinyl aromatic compounds can be used singly or in combinations of two or more thereof.

The mass proportion (BS) of the polymer block (A) in the block copolymer (P) of the present embodiment is preferably 10% by mass or more and 40% by mass or less.

The mass proportion (BS) of the polymer block (A) is preferably 10% by mass or more, more preferably 13% by mass or more, further preferably 15% by mass or more, and further more preferably 18% by mass or more, from the viewpoint of the elongation recovery and compatibility of the asphalt composition.

On the other hand, the mass proportion (BS) of the polymer block (A) is preferably 40% by mass or less, more preferably 35% by mass or less, further preferably 30% by mass or less, and further more preferably 25% by mass or less, from the viewpoint of excellent low temperature elongation properties of the asphalt composition.

In addition, when the mass proportion (BS) of a polymer block (A) mainly composed of a vinyl aromatic monomer unit having a high glass transition point is high, the deformation of the block copolymer (P) at a high temperature tends to be small, and the softening point tends to improve. On the other hand, a block copolymer (P) having a high mass proportion (BS) of a polymer block (A) mainly composed of a vinyl aromatic monomer unit having a high glass transition point has a high glass transition point and low flexibility at a low temperature, and thus an asphalt composition containing such a block copolymer (P) tends to have poor low temperature elongation properties. Accordingly, from the viewpoint of property balance, the mass proportion (BS) is preferably 10% by mass or more and 40% by mass or less based on the total amount of the block copolymer (P).

The mass proportion (BS) of the polymer block (A) in the block copolymer (P) of the present embodiment can be determined by the following expression (I), using the mass of the vinyl aromatic polymer block component (provide that the vinyl aromatic polymer block component having an average degree of polymerization of about 30 or less is excluded) determined, for example, by a method for oxidatively degrading a polymer with tertiary butyl hydroperoxide using osmium tetroxide as a catalyst (the method disclosed in I.M. KOLTHOFF, et. al, J. Polym. Sci. 1, p.429 (1946)).

6

$$\text{Mass proportion (BS) (\% by mass) of polymer block (A)}$$

$$= \text{(mass of polymer block (A) / mass of block copolymer (P))} \times 100 \quad ... \quad \text{(I)}$$

The mass ratio (BS) of the polymer block (A) in the block copolymer (P) of the present embodiment can be controlled in the above numerical range by adjusting a polymerization condition such as the amount of a vinyl aromatic monomer added or the polymerization time in the polymerization step.

(Polymer block (B))

The block copolymer (P) of the present embodiment includes a polymer block (B) mainly composed of a conjugated diene monomer unit.

The conjugated diene monomer unit is formed from a conjugated diene, and examples of the conjugated diene include, but are not limited to, 1,3-butadiene, 2-methyl-1,3-butadiene (isoprene), 2,3-dimethyl-1,3-butadiene, 1,3-pentadiene, 2-methyl-1,3-pentadiene, 1,3-hexadiene, or 1,3-cyclohexadiene. Among these, 1,3-butadiene and isoprene are preferable, and 1,3-butadiene is more preferable, from the viewpoints of excellent mechanical strength of the asphalt composition and being low in cost.

The conjugated dienes can be used singly or in combinations of two or more thereof.

(Vinyl bond content of block copolymer (P))

The conjugated diene monomer unit in the block copolymer (P) of the present embodiment consists of, for example, a conjugated diene monomer unit derived from a 1,2-bond and/or a 3,4-bond, and a conjugated diene monomer unit derived from a 1,4-bond.

As used herein, the "conjugated diene monomer unit derived from a 1,2-bond and/or a 3,4-bond" refers to a unit per conjugated diene produced as a result of polymerization of the conjugated diene in a 1,2-bond and/or a 3,4-bond. In addition, the "conjugated diene monomer unit derived from a 1,4-bond" refers to a unit per conjugated diene produced as a result of polymerization of the conjugated diene in a 1,4-bond.

The content of the conjugated diene monomer unit derived from a 1,2-bond and/or a 3,4-bond relative to the total content of the conjugated diene monomer unit in the block copolymer (P) of the present embodiment (hereinafter, also referred to as the "vinyl bond content") is preferably 9% by mass or more and 50% by mass or less.

The vinyl bond content of the block copolymer (P) of the present embodiment is preferably 50% by mass or less, more preferably 45% by mass or less, further preferably 40% by mass or less, and further more preferably 35% by mass or less, from the viewpoint of far superior elongation recovery of the asphalt composition of the present embodiment described later.

On the other hand, the vinyl bond content of the block copolymer (P) of the present embodiment is preferably 9% by mass or more, more preferably 10% by mass or more, further preferably 11% by mass or more, and further more preferably 12% by mass or more, from the viewpoint of being able to easily produce the same by a general polymerization method and from the viewpoint of superior low temperature elongation of the asphalt composition. The vinyl bond content can be measured by NMR, and can specifically be measured by the method described in Examples described later.

A conjugated diene monomer unit derived from a 1,2-bond and/or a 3,4-bond is more easily crosslinked and degraded by heat than a vinyl aromatic monomer unit and a conjugated diene monomer unit derived from a 1,4-bond. Because of this, by appropriately setting the upper limit of the vinyl bond content, a block copolymer (P) having good heat resistance tends to be able to be obtained.

That is, from the viewpoint of the heat resistance of the block copolymer (P), it is preferable to set the hydrogenation rate higher than the vinyl bond content. A vinyl bond is more likely to undergo a hydrogenation reaction than an ethylene chain derived from a 1,4-bond, and thus the vinyl bond portion preferentially turns into a single bond during the hydrogenation reaction. Because of this, when the hydrogenation rate is set to exceed the vinyl bond content, more of the ethylene chain portions remains as double bonds, and less of the vinyl bonds remain, which tends to increase the thermal stability.

The vinyl bond content can be controlled in the above numerical range by adjusting the temperature during the polymerization of the block copolymer (P) and the amount of a polar additive added. Specifically, when the temperature during polymerization is high, the vinyl bond content tends to be low, and when the temperature during polymerization is low, the vinyl bond content tends to be high, whereas when the amount of a polar additive added is large, the vinyl bond content tends to be high, and when the amount of a polar additive added is small or no polar additive is added, the vinyl bond content tends to be low.

In addition, when the vinyl bond content is higher than the hydrogenation rate, the difference therebetween is preferably 10 mol% or less.

(Mass proportion (RS) of vinyl aromatic monomer unit in polymer block (C))

In the block copolymer (P) of the present embodiment, when the polymer block (B) is a polymer block (C) consisting of the vinyl aromatic monomer unit and the conjugated diene monomer unit, the mass proportion (RS) of the vinyl aromatic monomer unit in the polymer block (C) calculated by the following expression (II) is preferably 3% by mass or more and less than 50% by mass.

In the following expression (II), TS is the mass proportion of the vinyl aromatic monomer unit in the block copolymer (P), and BS is the mass proportion of the polymer block (A) in the block copolymer (P).

$$RS = (TS - BS)/(100 - BS) \times 100 \ldots (II)$$

The mass proportion (RS) of the vinyl aromatic monomer unit in the polymer block (C) is preferably 3% by mass or more, more preferably 6% by mass or more, further preferably 10% by mass or more, and further more preferably 15% by mass or more, from the viewpoint of excellent compatibility between the asphalt and the block copolymer (P).

In addition, the mass proportion (RS) of the vinyl aromatic monomer unit is preferably less than 50% by mass, more preferably less than 45% by mass, further preferably less than 40% by mass, and further more preferably less than 35% by mass, from the viewpoint of far superior low temperature elongation properties of the asphalt composition.

When the mass proportion (RS) of the vinyl aromatic monomer unit in the polymer block (C) is high, the content of a vinyl aromatic monomer unit having a high glass transition point in the block copolymer (P) increases, and thus the deformation at a high temperature tends to be small, and the softening point tends to improve. In addition, the interaction with the aromatic component and the polar component of the asphalt tends to increase, and the compatibility with the asphalt tends to improve. That is, when the (RS) is high, the compatibility with the asphalt tends to improve, but the low temperature flexibility of the asphalt composition tends to worsen. On the other hand, when the mass proportion (RS) of the vinyl aromatic monomer unit in the polymer block (C) is high, the glass transition point of the block copolymer (P) tends to be high, and thus by appropriately setting the upper limit of the mass proportion (RS), the asphalt composition of the present embodiment can be designed to exhibit a certain degree of flexibility at a low temperature and exhibit the required low temperature elongation properties.

The mass proportion (RS) of the vinyl aromatic monomer unit in the polymer block (C) can be determined by subtracting the mass proportion (BS) of the polymer block (A) from the mass proportion (TS) of the vinyl aromatic monomer unit in the block copolymer (P) and dividing the resulting value (TS - BS) by the mass proportion (100 - BS) of the polymer block (C) to the block copolymer (P) as shown in the above expression (II) .

(Random block)

The polymer block (B) is preferably a random block. Here, "random" refers to a state in which the number of consecutive vinyl aromatic monomer units in the polymer block (B) is 10 or less.

The lower limit value of the content of the short-chain vinyl aromatic monomer polymerized portion in the polymer block (B) in the block copolymer (P) of the present embodiment is not particularly limited, and is preferably 50% by mass or more, more preferably 60% by mass or more, further preferably 70% by mass or more, and further more preferably 80% by mass or more, based on a total content of the vinyl aromatic monomer unit in the polymer block (B) of 100% by mass. In addition, the upper limit value of the content of the short-chain vinyl aromatic monomer polymerized portion in the polymer block (B) is not particularly limited, and is preferably 100% by mass or less, and more preferably 99% by mass or less, based on a total content of the vinyl aromatic monomer unit in the polymer block (B) of 100% by mass. When the content of the short-chain vinyl aromatic monomer polymerized portion in the polymer block (B) is within the above range, the low temperature elongation properties of the asphalt composition of the present embodiment described later tend to even further improve.

Here, the "short-chain vinyl aromatic monomer polymerized portion" refers to a component composed of 1 to 6 vinyl aromatic monomer units in the polymer block (B). The content of the short-chain vinyl aromatic monomer polymerized portion is determined as the content of 1 to 6 vinyl aromatic monomer units connected in the polymer block (B), based on a total content of the vinyl aromatic monomer units in the polymer block (B) of 100% by mass.

The content of a component composed of two connected vinyl aromatic monomer units is preferably 10% by mass or more and 45% by mass or less, more preferably 13% by mass or more and 42% by mass or less, and further preferably 19% by mass or more and 36% by mass or less, based on a total content of the vinyl aromatic monomer units in the polymer block (B) of 100% by mass. When the content of the component composed of two connected vinyl aromatic monomer units is within the above range, the low temperature elongation properties of the asphalt composition of the present embodiment tend to improve.

Further, the content of a component composed of three connected vinyl aromatic monomer units is preferably 45% by mass or more and 80% by mass or less, more preferably 45% by mass or more and 75% by mass or less, and further preferably 45% by mass or more and 65% by mass or less, based on a total content of the vinyl aromatic monomer units in the polymer block (B) of 100% by mass. When the content of the component composed of three connected vinyl aromatic monomer units is within the above range, the low temperature elongation properties of the asphalt composition of the present embodiment tend to improve.

In the polymer block (B) mainly composed of a conjugated diene monomer unit and the polymer block (C) consisting of the conjugated diene monomer unit and the vinyl aromatic monomer unit as one form thereof, when the first region to the sixth region are set so as to have the same mass in order from the polymerization initiation terminal side, and the vinyl content (vinyl bond content) before hydrogenation of the first region to the sixth region is V1 to V6, respectively, the distribution of the vinyl content (vinyl bond content) is not particularly limited and may be constant, or may be tapered, convex, or concave.

By adding a polar compound during the polymerization or controlling the polymerization temperature, the vinyl distribution can be controlled to be tapered, convex, or concave.

The tapered distribution refers to a distribution that satisfies V6 > V5 > V4 > V3 > V2 > V1 or V6 < V5 < V4 < V3 < V2 < V1. The convex distribution means a distribution in which V6 and V1 are smaller than V5 and V2, and V5 and V2 are smaller than V4 and V3. The concave distribution means a distribution in which V6 and V1 are larger than V5 and V2, and V5 and V2 are larger than V4 and V3.

(Mass proportion (TS) of vinyl aromatic monomer unit in block copolymer (P))

The mass proportion (TS) of the vinyl aromatic monomer unit in the block copolymer (P) of the present embodiment is preferably 20% by mass or more and 60% by mass or less based on the total amount of the block copolymer (P).

The mass proportion (TS) of the vinyl aromatic monomer unit in the block copolymer (P) of the present embodiment is preferably 20% by mass or more, more preferably 24% by mass or more, further preferably 26% by mass or more, and further more preferably 28% by mass or more, from the viewpoint of far superior compatibility with the asphalt. On the other hand, the mass proportion (TS) of the vinyl aromatic monomer unit in the block copolymer (P) of the present embodiment is preferably 60% by mass or less, more preferably 56% by mass or less, further preferably 52% by mass or less, and further more preferably 48% by mass or less, from the viewpoint of the asphalt composition of the present embodiment described later having excellent low melt viscosity, low temperature elongation properties, and elongation recovery.

The mass proportion (TS) of the vinyl aromatic monomer unit can be measured by the method described in Examples described later.

The mass proportion (TS) of the vinyl aromatic monomer unit in the block copolymer (P) of the present embodiment can be controlled in the above numerical range by adjusting a polymerization condition such as the amount of the vinyl aromatic monomer added or the polymerization time in the polymerization step.

The distributions of the vinyl aromatic monomer unit in the polymer block (A) mainly composed of a vinyl aromatic monomer unit, in the polymer block (B) mainly composed of a conjugated diene monomer unit, and in the polymer block (C) consisting of the vinyl aromatic monomer unit and the conjugated diene monomer unit are not particularly limited, and may be uniform, or may be tapered, stepped, convex, or concave.

A crystal portion may be present in the polymer blocks (A), (B), and (C). A plurality of segments different in content of the vinyl aromatic monomer unit may coexist in the polymer block (A) mainly composed of a vinyl aromatic monomer unit.

(Structure of block copolymer)

The block copolymer (P) of the present embodiment preferably contains at least one block copolymer selected from the group consisting of the following expressions (i) to (xiv).

$$A-B \quad \ldots \quad (i)$$

$$(A-B)_{n+1} \ldots (ii)$$

$$B-(A-B)_{n+1} \ldots (iii)$$

$$A-(B-A)_{n} \ldots (iv)$$

$$A-(B-A)_{n}-X \ldots (v)$$

$$[(A-B)_{k}]_{m}-X \ldots (vi)$$

$$[(A-B)_{k}-A]_{m}-X \ldots (vii)$$

$$A-C \ldots (viii)$$

$$(A-C)_{n+1} \ldots (ix)$$

$$C-(A-C)_{n+1} \ldots (x)$$

$$A-(C-A)_{n} \ldots (xi)$$

$$A-(C-A)_{n}-X \ldots (xii)$$

$$[(A-C)_{k}]_{m}-X \ldots (xiii)$$

$$[(A-C)_{k}-A]_{m}-X \ldots (xiv)$$

In the above expressions (i) to (xiv), A represents the polymer block (A), B represents the polymer block (B), and C represents the polymer block (C).

X represents a residue of a coupling agent or a residue of a polymerization initiator such as a polyfunctional organolithium.

m is an integer of 2 to 6, and n and k are each independently an integer of 1 to 4.

The values of m, n, and k in expressions (i) to (xiv) are optionally the same or different.
When a plurality of A, B, and C are present in the block copolymer, structures such as the molecular weight and the composition of each are optionally the same or different.
X is preferably a residue of a coupling agent from the viewpoint of controlling the molecular weight of the copolymer block.

(Block copolymer (D))

The block copolymer (P) of the present embodiment preferably contains a block copolymer (D) having a structure containing two or more polymer blocks (A) in a mass proportion of 50% by mass or more and 100% by mass or less.
That is, the block copolymer (D) is a suitable form of the block copolymer (P) of the present embodiment.
The mass proportion of the block copolymer (D) in the block copolymer (P) of the present embodiment is preferably 50% by mass or more, more preferably 55% by mass or more, further preferably 60% by mass or more, further more preferably 65% by mass or more, and more further preferably 70% by mass or more, from the viewpoints of excellent low temperature elongation properties of the asphalt composition of the present embodiment described later and far superior dynamic stability of the modified asphalt mixture of the present embodiment described later.

When two polymer blocks (A) are present in the block copolymer (D), the number of crosslinking points in the whole block copolymer (D) tends to increase, and the whole block copolymer (P) including the block copolymer (D) tends to exhibit rubber elasticity. As a result, the low temperature elongation properties related to expansion and contraction and the dynamic stability related to repeated deformation recovery of a tire tend to be improved.

The mass proportion of the block copolymer (D) having a structure containing two or more polymer blocks (A) in the block copolymer (P) of the present embodiment can be determined by the method described in Examples described later.

The content of the block copolymer (D) having a structure containing two or more polymer blocks (A) in the block copolymer (P) can be controlled in the above numerical range by adjusting the method for adding a monomer in the polymerization step of the block copolymer (P) of the present embodiment depending on the structure of the block copolymer, specifically, the structures shown in the above (i) to (xiv), and in addition thereto, adjusting the amount of a coupling agent added, and appropriately selectively using a polymerization initiator such as a polyfunctional organolithium and a terminator or adjusting the amount thereof added.

Examples of the coupling agent include the coupling agents exemplified in the section of Method for producing block copolymer described later.

In the block copolymer (P) of the present embodiment, the boundaries and the utmost ends of the polymer blocks (A), (B), and (C) do not necessarily need to be clearly distinguished.

Examples of the polymerization initiator and the terminator include the coupling agents exemplified in the section of Method for producing block copolymer described later.

(Hydrogenation rate)

The block copolymer (P) of the present embodiment may be a hydrogenated product.

In the block copolymer (P) of the present embodiment, the hydrogenation rate of the double bond included in the conjugated diene monomer unit is preferably 10 mol% or more, more preferably 20 mol% or more, and further preferably 30 mol% or more, from the viewpoint of the high softening point properties, the heat resistance stability, and the compatibility of the asphalt composition of the present embodiment described later.

In addition, in the block copolymer (P) of the present embodiment, the hydrogenation rate of the double bond included in the conjugated diene monomer unit is preferably 95 mol% or less, more preferably 90 mol% or less, further preferably 85 mol% or less, and further more preferably 80 mol%, from the viewpoint of the low temperature elongation properties, the low melt viscosity, and the economic efficiency of the asphalt composition.

Examples of the hydrogenation method include the method described later. The hydrogenation rate can be controlled in the above numerical range by adjusting a condition such as the amount of hydrogen supplied, the temperature, or the pressure in the hydrogenation step.

After hydrogenation, the proportion of the total mass of conjugated diene monomer units incorporated via a non-hydrogenated 1,2-bond, a hydrogenated 1,2-bond, a non-hydrogenated 3,4-bond, and a hydrogenated 3,4-bond to the total mass of conjugated diene monomer units incorporated in bonding modes of a non-hydrogenated 1,2-bond, a hydrogenated 1,2-bond, a non-hydrogenated 3,4-bond, a hydrogenated 3,4-bond, a non-hydrogenated 1,4-bond, and a hydrogenated 1,4-bond is equal to the vinyl bond content of the conjugated diene monomer units before hydrogenation. Therefore, the vinyl bond content of the conjugated diene monomer units before hydrogenation can be measured by nuclear magnetic resonance spectroscopy (NMR) using the block copolymer after hydrogenation, and can specifically be measured by the method described in Examples described later.

(Suitable form of block copolymer (P))

The block copolymer (P) of the present embodiment preferably includes the following block copolymer (a) (component (a)) and block copolymer (b) (component (b)) from the viewpoints of the dynamic stability of the block copolymer in the modified asphalt mixture and the water resistance of the modified asphalt mixture of the present embodiment described later.

Block copolymer (a): A block copolymer that consists of the polymer block (A), the polymer block (B) (excluding the structure of the polymer block (C)), and the polymer block (C) and has a peak molecular weight of 50,000 or more and less than 160,000.

Block copolymer (b): A block copolymer that is a component in which the ratio of the peak molecular weight thereof to the peak molecular weight of the component (a) has at least one or more peaks in the range of 1.5 or more and less than 4.3.

The block copolymer (a) is a low molecular weight component, and the block copolymer (b) is a high molecular weight component.

In addition, in the block copolymer (P) of the present embodiment, the mass ratio ((a)/(b)) between the block copolymer (a) and the block copolymer (b) is preferably 10/90 to 50/50, more preferably 10/90 to 40/60, and further preferably 15/85 to 40/60.

By increasing the ratio of the block copolymer (a), which is a low molecular weight component, in the block copolymer (P) of the present embodiment, the low melt viscosity of the asphalt composition is improved, but the high softening point properties of the asphalt composition and the dynamic stability of the modified asphalt mixture tend to be decreased. On the other hand, by increasing the mass ratio of the block copolymer (b), which is a high molecular weight component, the low melt viscosity is decreased, but the high softening point properties and the dynamic stability tend to be improved.

As described above, the peak molecular weight of the block copolymer (a) is 50,000 or more and less than 160,000, and from the viewpoints of the low temperature elongation properties of the asphalt composition described later and the dynamic stability of the modified asphalt mixture described later, the peak molecular weight is 50,000 or more, preferably 60,000 or more, more preferably 80,000 or more, and further preferably 90,000 or more. The peak molecular weight of the block copolymer (a) is less than 160,000, preferably 150,000 or less, more preferably 140,000 or less, and further preferably 130,000 or less, from the viewpoints of the processability when producing the block copolymer (P) and the processability when producing the modified asphalt mixture described later.

The block copolymer (b) (component (b)) preferably contains the following component (b-1) and/or component (b-2).

Component (b-1): A block copolymer that is a component in which the ratio of the peak molecular weight thereof to the peak molecular weight of the component (a) has at least one or more peaks in the range of 1.5 or more and less than 2.5.

Component (b-2): A block copolymer that is a component in which the ratio of the peak molecular weight thereof to the peak molecular weight of the component (a) has at least one or more peaks in the range of 2.5 or more and less than 4.3.

The block copolymer (b) preferably includes the block copolymer (b-1) described above. The ratio of the peak molecular weight of the block copolymer (b-1) to the peak molecular weight of the block copolymer (a) is 1.5 or more and less than 2.5, preferably 1.6 or more and less than 2.4, more preferably 1.7 or more and less than 2.3, and further preferably 1.8 or more and less than 2.2.

The ratio of the component (b-1) to the total amount of the component (a) and the component (b) is preferably 0% by mass or more and 40% by mass or less. The lower limit of the ratio of component (b-1) is preferably 0% by mass or more, more preferably 2% by mass or more, further preferably 4% by mass or more, and particularly preferably 6% by mass or more, from the viewpoint of the dynamic stability of the modified asphalt mixture. The upper limit of the ratio of component (b-1) is preferably 40% by mass or less, more preferably 35% by mass or less, further preferably 30% by mass or less, and further more preferably 25% by mass or less, from the viewpoint of the low melt viscosity of the asphalt composition.

The ratio of the component (b-1) can be calculated as the ratio of the area of component (b-1) to the total area of a polymer composition consisting of the block copolymer (a) and the block copolymer (b) in an elution curve of gel permeation chromatography (hereinafter also referred to as "GPC") of the block copolymer.

The block copolymer (b) preferably includes the block copolymer (b-2). The ratio of the peak molecular weight of the block copolymer (b-2) to the peak molecular weight of the block copolymer (a) is 2.5 or more and less than 4.3, preferably 2.5 or more and less than 4.1, more preferably 2.6 or more and less than 3.9, and further preferably 2.6 or more and less than 3.6.

The ratio of the component (b-2) to the total amount of the component (a) and the component (b) is preferably 20% by mass or more and 90% by mass or less. The lower limit of the ratio of component (b-2) is preferably 20% by mass or more, more preferably 25% by mass or more, further preferably 30% by mass or more, and further more preferably 35% by mass or more, from the viewpoint of the dynamic stability of the modified asphalt mixture. The upper limit of the ratio of the component (b-2) is preferably 90% by mass or less, more preferably 85% by mass or less, further preferably 80% by mass or less, and further more preferably 75% by mass or less, from the viewpoint of the processability of the asphalt composition.

The ratio of the component (b-2) can be calculated as the ratio of the area of component (b-2) to the total area of a polymer composition consisting of the block copolymer (a) and the block copolymer (b) in an elution curve of GPC of the block copolymer.

The peak molecular weight ratios of component (b-1) and component (b-2) to component (a), and the area ratios of component (b-1) and component (b-2) in the GPC elution curve can be controlled within the above ranges by adjusting the conditions of the coupling reaction described later, specifically, the type of coupling agent, the amount thereof added, the temperature, and the time.

The ratios and the peak molecular weights of component (a), (b-1) and (b-2) components included in the block copolymer (P) of the present embodiment can be measured by the method described in Examples described later.

From the viewpoints of excellent compatibility with the asphalt and excellent dynamic stability and water resistance of the modified asphalt mixture, the block copolymer (P) of the present embodiment preferably has a functional group, and more preferably has a functional group containing a nitrogen atom (hereinafter sometimes referred to as a nitrogen-containing group).

Examples of the nitrogen-containing group include, but are not limited to, at least one functional group selected from the group consisting of an amino group, an amide group, an imino group, an imide group, a urea group, a urethane group, an isocyanate group, an amidine group, a guanidine group, and a carbodiimide group.

Any of the functional groups described above is preferably added to the block copolymer (P) of the present embodiment, and examples of the addition method include, but are not limited to, a method involving using a monomer having any of these functional group as a monomer constituting the block copolymer (P), and a method involving bonding a monomer unit constituting the block copolymer, and a residue of a polymerization initiator, coupling agent, or terminator having any of these functional groups.

The nitrogen content of the block copolymer (P) of the present embodiment is preferably 20 ppm or more and 1000 ppm or less. The nitrogen content is preferably 20 ppm or more, more preferably 40 ppm or more, further preferably 60 ppm or more, further more preferably 80 ppm or more, and more further preferably 100 ppm or more, from the viewpoint of superior dynamic stability and water resistance of the modified asphalt mixture of the present embodiment described later. On the other hand, from the viewpoint of economic efficiency, the nitrogen content is preferably 1000 ppm or less, more preferably 800 ppm or less, further preferably 700 ppm or less, and further more preferably 600 ppm or less.

The nitrogen content of the block copolymer (P) of the present embodiment can be determined by the method described in Examples described later.

The nitrogen content of the block copolymer (P) of the present embodiment can be controlled in the above numerical range by adjusting the amounts of the polymerization initiator, monomer, coupling agent, and polymerization terminator having a nitrogen-containing group added in the polymerization step. The polymerization initiator, monomer, coupling agent, and polymerization terminator having a nitrogen-containing group are not particularly limited, and examples thereof include a polymerization initiator, a monomer, a coupling agent, and a polymerization terminator described later.

When the block copolymer (P) of the present embodiment has a nitrogen-containing group, the compatibility with the asphalt tends to improve, and the dynamic stability and water resistance of the modified asphalt mixture described later tend to improve.

It is considered that the interaction such as a hydrogen bond between the nitrogen-containing group contained in the block copolymer (P) of the present embodiment and a polar group in a component contained in the asphalt contributes to the improvement of compatibility. In addition, it is considered that the dynamic stability and water resistance of the modified asphalt mixture are improved by the interaction such as a hydrogen bond between the nitrogen-containing group contained in the block copolymer (P) and a silanol group on the surface of the aggregate contained in the modified asphalt mixture described later.

The block copolymer (P) of the present embodiment preferably has a functional group containing a silicon atom from the viewpoints of excellent compatibility with the asphalt and excellent dynamic stability and water resistance in the asphalt mixture. Examples of the functional group containing a silicon atom include, but are not limited to, at least one functional group selected from the group consisting of a silanol group, an alkoxysilyl group, a carbylsilyl group, and a siloxane group.

Any of these functional groups is preferably added to the block copolymer (P) of the present embodiment, and examples of the addition method include, but are not limited to, a method involving using a monomer having any of these functional group as a monomer constituting the block copolymer, and a method involving bonding a monomer unit constituting the block copolymer, and a residue of a polymerization initiator, coupling agent, or terminator having any of these functional groups.

(Physical properties of block copolymer)

<Loss tangent peak top and peak temperature>

The block copolymer (P) of the present embodiment has a peak top (peak height) of loss tangent (tan$\delta$) in the range of -90°C or more and -20°C or less in a spectrum of dynamic viscoelasticity, and the value of the peak top (peak height) is preferably 0.6 or more and 2.0 or less. When the peak top (peak height) is within the above range, the compatibility with an asphalt tends to be excellent, and the low temperature elongation properties of the asphalt composition described later tend to be excellent.

From the viewpoints of making the compatibility with the asphalt excellent and improving the high softening point properties and the low temperature elongation properties of the asphalt composition in an even more balanced manner, the value of the peak top (peak height) of the block copolymer (P) of the present embodiment is more preferably 0.65 or more and 1.6 or less, further preferably 0.7 or more and 1.5 or less, and further more preferably 0.75 or more and 1.4 or less.

The value of the peak top (peak height) of loss tangent (tan$\delta$) in the range of -90°C or more and -20°C or less in the dynamic viscoelastic spectrum described above can be controlled in the above range by adjusting the distribution of the vinyl bond content of the polymer block (B) (excluding the form of the polymer block (C); hereinafter, the same applies) and the polymer block (C) in the block copolymer (P) of the present embodiment and the content of the short-chain vinyl aromatic monomer polymerized portion in the polymer block (B) and the polymer block (C).

For example, if the distribution of the vinyl bond content of the polymer block (B) and the polymer block (C) is constant, the peak top (peak height) tends to be high, and if the distribution of the vinyl bond content of the polymer block (B) and the polymer block (C) is tapered, convex, or concave, the peak top (peak height) tends to be low, whereas if the content of the short-chain vinyl aromatic monomer polymerized portion is high, the peak top (peak height) tends to be high and if the content of the short-chain vinyl aromatic monomer polymerized portion is low, the peak top (peak height) tends to be low.

In addition, from the viewpoint of excellent low temperature elongation properties of the asphalt composition described later, the block copolymer (P) of the present embodiment has a range of the peak temperature of the loss tangent (tan$\delta$) of preferably - 90°C or more and -5°C or less, more preferably -87°C or more and -8°C or less, further preferably -85°C or more and -12°C or less, and further more preferably -83°C or more and -15°C or less.

The peak height and the peak temperature of the loss tangent (tan$\delta$) can be determined by the method described in Examples described later.

The peak temperature of the loss tangent (tan$\delta$) can be controlled in such a way as to have a peak top (peak height) of the loss tangent (tan$\delta$) in the range of -90°C or more and -5°C or less, for example by adjusting the ratio of the content of the vinyl aromatic monomer unit and the content of the conjugated diene monomer unit in the polymer block (B) and the polymer block (C), the microstructure of the conjugated diene monomer unit, and the like.

For example, when the ratio of the vinyl aromatic monomer unit in the polymer block (B) and the polymer block (C) is increased, the peak top of the loss tangent (tan$\delta$) tends to be on the high temperature side, and when the ratio of the vinyl aromatic monomer unit is decreased, the peak top of the loss tangent (tan$\delta$) tends to be on the low temperature side, whereas when the vinyl bond content of the polymer block (B) and (C) is increased, the peak top of the loss tangent (tan$\delta$) tends to be on the high temperature side, and when the vinyl bond content is decreased, the peak top of the loss tangent (tan$\delta$) tends to be on the low temperature side.

<5% by mass toluene solution viscosity (condition (1))>

The block copolymer (P) of the present embodiment has a 5% by mass toluene solution viscosity at 25°C of 5 mPa·s or more and 45 mPa·s or less.

The 5% by mass toluene solution viscosity at 25°C of the block copolymer (P) of the present embodiment is 5 mPa·s or more, preferably 6 mPa·s or more, more preferably 7 mPa·s or more, and further preferably 8 mPa·s or more, from the viewpoint of far superior high softening point properties and low temperature elongation properties of the asphalt composition described later. On the other hand, the 5% by mass toluene solution viscosity at 25°C of the block copolymer (P) of the present embodiment is 45 mPa·s or less, preferably 40 mPa·s or less, more preferably 35 mPa·s or less, further preferably 30 mPa·s or less, and further more preferably 25 mPa·s or less, from the viewpoint of excellent low melt viscosity of the asphalt composition described later.

In the present embodiment, the 5% by mass toluene solution viscosity can be determined by the method described in Examples described later.

The 5% by mass toluene solution viscosity at 25°C of the block copolymer (P) of the present embodiment can be controlled in the above numerical range by adjusting the molecular weight and the molecular weight distribution of the block copolymer (P). For example, when the molecular weight of the block copolymer (P) of the present embodiment is 200,000, the mass proportion (TS) of the vinyl aromatic monomer unit is 30% by mass, the mass proportion (BS) of the polymer block (A) is 30% by mass, and the hydrogenation rate is 20%, a 5% by mass toluene solution viscosity at 25°C is about 10 to 20 mPa·s. By setting the molecular weight to 250,000 with the same structure, the 5% by mass toluene solution viscosity at 25°C is about 18 to 28 mPa·s. In addition, the viscosity can also be controlled by adjusting the hydrogenation rate. For example, by increasing the hydrogenation rate, the 5% by mass toluene solution viscosity tends to be increased. The molecular weight of the block copolymer (P) can be controlled by adjusting the amounts of the monomer and the polymerization initiator added in the polymerization step, the molecular weight distribution of the block copolymer (P) can be controlled by appropriately selectively using a coupling agent and a polymerization initiator such as a polyfunctional organolithium or adjusting the amounts thereof added, and the hydrogenation rate can be controlled by adjusting the amount of the hydrogenation catalyst and the amount of hydrogen supplied.

<Content of magnesium element (condition (2))>

The block copolymer (P) of the present embodiment contains 1 to 200 ppm of the magnesium element.

The magnesium element can be contained in the block copolymer (P), for example, by dissolving or dispersing the magnesium element in the form of a metal salt.

The method for causing the block copolymer (P) to contain the magnesium element is not particularly limited, and examples thereof include a method in which in the step of steam stripping a polymer resulting from solution polymerization, magnesium is added to water to be contacted with the polymer.

Magnesium can be used in the form of a metal salt or a metal ion, and examples of such a metal salt include a metal carbonate, a metal sulfate, a metal hydroxide, and a metal chloride. One of these may be used alone, two or more thereof may be used, or a mixture or an aqueous solution thereof may be used.

The content of the magnesium element can be controlled in the above numerical range, for example, by adjusting the concentration of magnesium in water to be contacted with the polymer in the above steam stripping step.

When the block copolymer (P) is mixed with an aggregate including a fine particle, the inclusion of a metal in the block copolymer (P), tends to improve the dispersibility of a fine particle aggregate in an asphalt composition including the fine particle aggregate, and also tends to improve a property of a modified asphalt mixture, which is a mixture with an aggregate. It is considered that this is due to the influence of the metal in the polymer acting on the metal included in the aggregate to suppress the agglomeration of the metals in the fine particle aggregate. The metal included in the aggregate can be contained, for example, in the form of an ion.

When the content of the magnesium element in the block copolymer (P) of the present embodiment is 1 ppm or more, the dissolution of the block copolymer (P) in an asphalt tends to exhibit a sufficient rate. Fast dissolution and short production time of the asphalt composition improve production efficiency, and sufficient solubility obtained tends to easily ensure good compatibility.

By including a certain amount of the magnesium element in the block copolymer (P) of the present embodiment, when the block copolymer (P) and an aggregate are mixed, electrostatic repulsion occurs between the metal in the fine particle aggregate and the magnesium element, and the asphalt composition and the modified asphalt mixture tend to be stabilized.

On the other hand, when the magnesium element included in the block copolymer (P) is too much, agglomeration with the metal included in the fine particle aggregate and agglomeration of remaining metals in the block copolymer (P) tend to occur easily. The formation of an agglomerate tends to make it difficult to form a uniform asphalt composition, and thus the producibility may worsen, such as requiring a longer stirring time. When the content of the magnesium element in the block copolymer (P) is 200 ppm or less, the strength of the asphalt composition including a fine particle aggregate can be maintained at a good level. From the viewpoint of the stability of the fine particle aggregate, the magnesium content of the block copolymer (P) is preferably 150 ppm or less, and more preferably 100 ppm or less.

<Content of calcium element (condition (3))>

The block copolymer (P) of the present embodiment contains 100 to 500 ppm of the calcium element.

The calcium element can be contained in the block copolymer (P), for example, by dissolving or dispersing the calcium element in the form of a metal salt.

The method for causing the block copolymer (P) to contain the calcium element is not particularly limited, and the calcium element may be added in the same step as for magnesium described above, or in a different step.

Calcium can be used in the form of a metal salt or a metal ion, and examples of such a metal salt include a metal carbonate, a metal sulfate, a metal hydroxide, and a metal chloride. One of these may be used alone, or two or more thereof may be used. In addition, these can be used as a mixture or an aqueous solution.

When the content of the calcium element in the block copolymer (P) is 500 ppm or less, the elongation recovery of the asphalt composition including a fine particle aggregate after a thermal degradation test can be maintained at a good level. In order to stabilize the fine particle aggregate, the content of the calcium element in the block copolymer (P) is preferably 400 ppm or less, and more preferably 300 ppm or less. In addition, when the content of the calcium element is 100 ppm or more, a practically sufficient dissolution rate tends to be exhibited when an asphalt, a file particle aggregate, and a block copolymer are mixed.

The content of the calcium element can be controlled in the above numerical range, for example, by adjusting the concentration of calcium in water to be contacted with the block copolymer (P) in the above steam stripping step.

When the block copolymer (P) of the present embodiment includes both the magnesium element and the calcium element described above, the solubility and the dissolution stability of the asphalt composition are particularly improved. It is considered that this is because the presence of a certain amount of the calcium element causes the interaction between the magnesium element and the metal in the fine particle aggregate to work more easily.

<Weight average molecular weight>

The weight average molecular weight of the block copolymer (P) of the present embodiment is preferably 50,000 or more and 500,000 or less.

The weight average molecular weight of the block copolymer (P) of the present embodiment is preferably 50,000 or more, more preferably 80,000 or more, further preferably 100,000 or more, and further more preferably 120,000 or more, from the viewpoints of the high softening point properties of the asphalt composition described later and the dynamic stability of the modified asphalt mixture described later. In addition, the weight average molecular weight is preferably 500,000 or less, more preferably 460,000 or less, further preferably 420,000 or less, and further more preferably 380,000 or less, from the viewpoint of the low melt viscosity of the asphalt composition described later.

The weight average molecular weight of the block copolymer (P) can be controlled in the above numerical range by adjusting a polymerization condition.

<Molecular weight distribution>

The lower limit value of the molecular weight distribution (Mw/Mn) (the ratio of the weight average molecular weight (Mw) to the number average molecular weight (Mn)) of the block copolymer (P) of the present embodiment is preferably 1.03 or more, more preferably 1.05 or more, further preferably 1.11 or more, and further more preferably 1.20 or more, from the viewpoints of being able to reduce the amount of the block copolymer (P) added to the asphalt and making the processability of the asphalt composition far superior.

In addition, the upper limit value of the molecular weight distribution (Mw/Mn) of the block copolymer (P) is preferably 2.0 or less, more preferably 1.7 or less, further preferably 1.5 or less, and further more preferably 1.4 or less, from the viewpoints of making the asphalt composition described later excellent in producibility and being able to reduce the amount of the block copolymer (P) added to the asphalt.

The weight average molecular weight (Mw), number average molecular weight (Mn), and molecular weight distribution (Mw/Mn) of the block copolymer (P) of the present embodiment can be determined by the methods described in Examples described later.

<Separability according to ASTM D5976>

In the block copolymer (P) of the present embodiment, the separability according to ASTM D5976 in a mixture obtained by mixing 4 parts by mass of the block copolymer (P) and 96 parts by mass of an asphalt in which in composition analysis of the asphalt according to a TLC-FID JPI method (JPI-5S-70), per 100% by mass in total of a saturate, an aromatic, a resin, and an asphaltene, a total amount of the resin and the asphaltene is 30% by mass or more is preferably 5°C or less.

By having the above property, the effect of improving the high temperature storage stability and the elongation recovery of the asphalt composition of the present embodiment can be obtained.

The separability according to ASTM D5976 is more preferably 4°C or less, and further preferably 3°C or less.

The separability according to ASTM D5976 can be controlled to 5°C or less by adjusting the hydrogenation rate, TS, BS, RS and the molecular weight of the block copolymer (P).

[Asphalt composition]

The asphalt composition of the present embodiment includes the block copolymer (P) of the present embodiment described above and an asphalt.

The asphalt composition of the present embodiment contains 0.5 parts by mass or more and 30 parts by mass or less of the block copolymer (P) per 100 parts by mass of the asphalt, from the viewpoints of high softening point properties, excellent dynamic stability, high elongation recovery, low melt viscosity, and compatibility. The asphalt composition contains preferably 1 part by mass or more and 20 parts by mass or less, more preferably 1.5 parts by mass or more and 16 parts by mass or less, and further preferably 2 parts by mass or more and 12 parts by mass or less of the block copolymer (P).

In the modified asphalt mixture described later, which is a mixture of the asphalt composition and an aggregate, a portion containing only a fine particle aggregate corresponds to the asphalt composition.

In the asphalt composition of the present embodiment, as the block copolymer (P), one having a nitrogen content of 20 ppm or more and 1000 ppm or less is preferably used. Further, as the asphalt, an asphalt in which in composition analysis of the asphalt according to a TLC-FID JPI method (JPI-5S-70), per 100% by mass in total of a saturate, an aromatic, a resin, and an asphaltene, a total amount of the resin and the asphaltene is 30% by mass or more is preferably used.

Even in a suitable form of the asphalt composition of the present embodiment, the asphalt composition preferably contains 0.5 parts by mass or more and 30 parts by mass or less of the block copolymer (P) per 100 parts by mass of the asphalt, from the viewpoints of high softening point properties, excellent dynamic stability, high elongation recovery, low melt viscosity, and compatibility. The asphalt composition contains more preferably 1 part by mass or more and 24 parts by mass or less, further preferably 1.5 parts by mass or more and 20 parts by mass or less, and further more preferably 2 parts by mass or more and 16 parts by mass or less of the block copolymer (P).

(Asphalt)

The asphalt composition of the present embodiment contains an asphalt.

Examples of the asphalt include, but are not limited to, a by-product of petroleum refining (petroleum asphalt), an asphalt obtained as a natural product (natural asphalt), or a mixture obtained by mixing any of these asphalts and a petroleum.

The asphalt usually often includes bitumen as a main component.

Examples of the asphalt include, but are not limited to, straight asphalt, semi-blown asphalt, blown asphalt, solvent deasphalt asphalt, tar, pitch, cutback asphalt to which an oil is added, and asphalt emulsion.

Among these, the asphalt is preferably straight asphalt from the viewpoint of availability.

These may be used singly or as a mixture of two or more thereof.

In addition, a petroleum solvent extracted oil, an aroma hydrocarbon process oil, or an aromatic heavy mineral oil such as extract may be added to various asphalts.

The asphalt has a penetration (measured according to JIS-K2207) of preferably 30 or more and 300 or less, more preferably 50 or more and 250 or less, and further preferably 60 or more and 200 or less.

When the penetration of asphalt is within the above range, the asphalt composition of the present embodiment tends to be excellent in balance of high softening point properties, low melt viscosity, low temperature elongation properties, dynamic stability, compatibility, and heat resistance stability.

In addition, as described above, in the asphalt composition of the present embodiment, as the asphalt, one in which when the total amount of a saturate, an aromatic, a resin, and an asphaltene in analysis by a measurement method according to a TLC-FID JPI method (JPI-5S-70) of the Japan Petroleum Institute Standard and Manuals Testing Method for Petroleum Products is 100% by mass, the total amount of the resin and the asphaltene is 30% by mass or more is preferably used. It is considered that it is difficult for the asphalt in the above range to be compatible by use of a conventional styrene elastomer, and the asphalt in the above range can be made compatible by using the block copolymer (P) of the present embodiment.

Here, the saturate is a paraffinic or naphthenic oil having a molecular weight of 300 to 2000, the aromatic is an aromatic oil having a molecular weight of 500 to 2000, the resin is a condensed polycyclic aromatic resin having a molecular weight of 500 to 50,000 and containing a heteroatom, and the asphaltene is a condensed polycyclic aromatic having a molecular weight of 1000 to 100,000, having a layered structure, and containing a heteroatom.

It is considered that as the content of the resin and the asphaltene in the asphalt increases, the solubility parameter deviates, resulting in poor compatibility with the asphalt, by use of a conventional styrene elastomer. On the other hand, it is considered that by introducing a functional group into the block copolymer (P) of the present embodiment, the interaction with the heteroatoms in the resin and the asphaltene works to make the compatibility with the asphalt excellent. Then, in view of the large amount of nitrogen and oxygen as heteroatoms included in the resin and the asphaltene, it is considered that the block copolymer (P) of the present embodiment preferably contains nitrogen and/or silicon as a functional group.

Conventionally, a colloidal index has been used as an index representing the composition of an asphalt. The colloidal index is a value obtained by dividing the sum of the asphaltene and the saturate by the sum of the aromatic and the resin, and the present inventors have considered that from the viewpoint of focusing on the function as a compatibilizer in a modified asphalt mixture of the block copolymer (P) of the present embodiment, it is preferable to focus on the proportion of the asphaltene and the resin rather than the asphaltene and the saturate represented by the colloidal index for design. That is, when the block copolymer (P) is set such that the 5% by mass toluene solution viscosity at 25°C is 5 mPa·s or more and 45 mPa·s or less to ensure the ease of mixing during processing and is then provided with a structure having a functional group in such a way as to satisfy a nitrogen concentration of 20 ppm or more and 1000 ppm or less and/or a silicon concentration of 50 ppm or more and 300 ppm or less, even if the content of the resin and the asphaltene in the asphalt is high, the affinity between the heteroatom or the aggregate in the modified asphalt mixture described later and the block copolymer (P) tends to improve to facilitate the exertion of a compatibilizing action.

The toluene solution viscosity reflects the structure of the block copolymer (P), and the higher the molecular weight, the hydrogenation rate, and the amount of the aromatic vinyl and the lower the vinyl bond content, the higher the toluene solution viscosity tends to be. By adjusting the structure thereof such that the 5% by mass toluene solution viscosity is in a certain range and also setting the concentration of nitrogen and/or silicon in a preferable range, the block copolymer (P) tends to be highly compatible even with an asphalt having a relatively high content of the resin and/or the asphaltene.

The block copolymer (P) of the present embodiment tends to be able to obtain superior compatibility by controlling the interaction with the saturate and the aromatic of the asphalt. Specific examples of the control method include a method involving increasing the hydrogenation rate of the conjugated diene in the block copolymer (P) of the present embodiment, or adjusting the amount of the vinyl aromatic monomer unit according to the ratio of the aromatic of the asphalt, when the amount of the saturate of the asphalt is large. In particular, it is considered that a method involving setting the mass proportion (RS) of the vinyl aromatic monomer unit in the polymer block (C) in the most suitable range is important. When the amount of the aromatic, the resin, and the asphaltene in the asphalt is large, it is preferable to increase the mass proportion (RS) of the vinyl aromatic monomer unit in the polymer block (C). Thereby, the compatibility between the block copolymer (P) and the asphalt can be enhanced.

The asphalt composition of the present embodiment contains 0.5 parts by mass or more and 30 parts by mass or less of the block copolymer (P) of the present embodiment per 100 parts by mass of the asphalt from the viewpoint of high softening point properties, and preferably 2 parts by mass or more, more preferably 3 parts by mass or more, and further preferably 3.5 parts by mass or more from the viewpoint of providing the asphalt composition with far superior high softening point properties. On the other hand, in the asphalt composition of the present embodiment, the proportion of the block copolymer (P) contained is preferably 20 parts by mass or less, more preferably 16 parts by mass or less, and further preferably 14 parts by mass or less, from the viewpoint of providing the asphalt composition with far superior low melt viscosity.

(Tackifier)

In the present embodiment, the asphalt composition preferably includes a tackifier from the viewpoints of shortening the production time of the asphalt composition and making the compatibility and the aggregate stripping resistance performance of the asphalt composition far superior.

Examples of the tackifier include, but are not limited to, a rosin resin, a hydrogenated rosin resin, a terpene resin, a coumarone resin, a phenol resin, a terpene-phenol resin, an aromatic hydrocarbon resin, and an aliphatic hydrocarbon resin.

These tackifiers may be used singly or can be used in combinations of two or more thereof. As a more specific tackifier, the tackifier disclosed in "Compounding Ingredients for Rubber and Plastics" (edited by Rubber Digest) can be used. An aromatic hydrocarbon resin is preferable from the viewpoint of making the compatibility and the aggregate stripping resistance performance far superior.

The content of the tackifier in the asphalt composition of the present embodiment is preferably more than 0 parts by mass and 200 parts by mass or less, and more preferably 3 parts by mass or more and 100 parts by mass or less, per 100 parts by mass of the above block copolymer (P). By setting the content in the range, the compatibility and the aggregate stripping resistance performance tend to be far superior.

(Oil)

The asphalt composition of the present embodiment preferably includes an oil from the viewpoint of far superior low melt viscosity.

Examples of the oil that can be used include, but are not limited to, a mineral oil softener and a synthetic resin softener.

Examples of the mineral oil softener include, but are not limited to, a paraffin oil, a naphthene oil, and an aromatic oil. In general, an oil in which the carbon atoms of a paraffin hydrocarbon accounts for 50% or more of all carbon atoms included in the oil is referred to as a "paraffin oil," an oil in which the carbon atoms of a naphthene hydrocarbon accounts for 30% or more and 45% or less is referred to as a "naphthene oil," and an oil in which the carbon atoms of an aromatic hydrocarbon accounts for 35% or more is referred to as an "aromatic oil."

When the asphalt composition of the present embodiment contains a mineral oil softener, the workability of the asphalt composition even further improves. As the mineral oil softener, a paraffin oil is preferable from the viewpoint of far superior low melt viscosity and low-temperature performance of the asphalt composition, and a naphthene oil is preferable from the viewpoint of far superior low melt viscosity and compatibility of the asphalt composition.

In addition, examples of the synthetic resin softener include, but are not limited to, polybutene and low molecular weight polybutadiene, and polybutene and low molecular weight polybutadiene are preferable.

The content of the oil in the asphalt composition of the present embodiment is preferably 10 parts by mass or more and 50 parts by mass or less, more preferably 15 parts by mass or more and 40 parts by mass or less, and further preferably 20 parts by mass or more and 30 parts by mass or less per 100 parts by mass of the block copolymer (P) of the present embodiment, from the viewpoint of suppressing oil bleeding and being able to ensure sufficient mechanical strength in practical use of the asphalt composition.

(Foaming agent)

The asphalt composition of the present embodiment may contain a foaming agent from the viewpoints of far superior low melt viscosity and being able to further shorten the production time of the asphalt composition.

Examples of the foaming agent include, but are not limited to, sodium hydrogen carbonate, ammonium carbonate, diazoaminobenzene, N,N'-dinitrosopentamethylenetetramine, and 2,2'-azobis(isobutyronitrile).

These foaming agents may be used singly or in combinations of two or more thereof.

Among these, diazoaminobenzene, N,N'-dinitrosopentamethylenetetramine, and 2,2'-azobis(isobutyronitrile) are preferable from the viewpoint of superior compatibility.

The proportion of the foaming agent contained to the whole asphalt composition of the present embodiment is preferably 0.1% by mass or more, and more preferably 0.3% by mass or more, from the viewpoints of making the low melt viscosity far superior and being able to further shorten the production time of the asphalt composition. In addition, the proportion of the foaming agent to the whole asphalt composition of the present embodiment is preferably 3% by mass or less, more preferably 2% by mass or less, and further preferably 1% by mass or less from the viewpoint of excellent economic efficiency.

(Additive)

The asphalt composition of the present embodiment may include another additive generally used as a blending material for a thermoplastic resin or a rubbery polymer.

Examples of the another additive include an inorganic filler, a lubricant, a mold release agent, a plasticizer, an antioxidant, a stabilizer, a flame retardant, an antistatic agent, a reinforcing agent such as an organic fiber, a glass fiber, a carbon fiber, or a metal whisker, a colorant, a pigment, a viscosity modifier, an antistripping agent, and a pigment dispersant.

The content of the another additive is not particularly limited, and is usually 50 parts by mass or less per 100 parts by mass of the asphalt.

Examples of the inorganic filler include, but are not limited to, calcium carbonate, magnesium carbonate, magnesium hydroxide, calcium sulfate, barium sulfate, silica, clay, talc, mica, wollastonite, montmorillonite, zeolite, alumina, titanium oxide, magnesium oxide, zinc oxide, slug wool, and glass fiber.

Examples of the lubricant and the mold release agent include, but are not limited to, a pigment such as carbon black or iron oxide, stearic acid, behenic acid, zinc stearate, calcium stearate, magnesium stearate, and ethylene bisstearamide.

Examples of the stabilizer include, but are not limited to, various stabilizers such as an antioxidant or a light stabilizer.

Examples of the antioxidant include, but are not limited to, a phenol antioxidant such as a radical scavenger, a phosphorus antioxidant such as a peroxide decomposer, and a sulfur antioxidant. In addition, an antioxidant having both performance properties may be used.

These antioxidants may be used singly or in combinations of two or more thereof. Among these, a phenol antioxidant is preferable from the viewpoints of making the heat resistance stability (heat aging resistance) of the asphalt composition far superior and also being able to suppress gelation.

Examples of the antioxidant include, but are not limited to, a hindered phenol antioxidant such as 2,6-dit-butyl-4-methylphenol, n-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenylacrylate, 2,4-di-t-amyl-6-[1-(3,5-di-t-amyl-2-hydroxyphenyl)ethyl]phenylacrylate, or 2-[1-(2-hydroxy-3,5-di-tert-pentylphenyl)]acrylate; a sulfur antioxidant such as dilaurylthiodipropionate, lauryl stearyl thiodipropionate, or pentaerythritol-tetrakis(β-laurylthiopropionate); and a phosphorus antioxidant such as tris(nonylphenyl)phosphite or tris(2,4-di-t-butylphenyl)phosphite.

Examples of the light stabilizer include, but are not limited to, a benzotriazole ultraviolet absorber such as 2-(2'-hydroxy-5'-methylphenyl)benzotriazole, 2-(2'-hydroxy-3',5'-t-butylphenyl)benzotriazole, or 2-(2'-hydroxy-3',5'-di-t-butylphenyl)-5-chlorobenzotriazole; a benzophenone ultraviolet absorber such as 2-hydroxy-4-methoxybenzophenone; and a hindered amine light stabilizer.

By including an antistripping agent in the asphalt composition of the present embodiment, when the asphalt composition and an aggregate are mixed, stripping of the asphalt composition from the aggregate tends to be able to be even further prevented.

Examples of the antistripping agent include a resin acid, and a specific example thereof is a polycyclic diterpene having a carboxyl group and having 20 carbon atoms, and suitable examples thereof include a rosin containing at least one selected from the group consisting of abietic acid, dehydroabietic acid, neoabietic acid, pimaric acid, isopimaric acid, and palustric acid. In addition, a fatty acid or a fatty acid amide functions as an antistripping agent and a lubricant, and thus the fatty acid or fatty acid amide can be applied as an antistripping agent.

Further examples of the antistripping agent include a polyamide resin, a polyester resin; an amine compound such as tallow alkylpropylenediamine or tallow alkylpropylenetriamine; a quaternary ammonium salt such as monoalkylammonium chloride, dialkylammonium chloride, or ethylene oxide addition type ammonium chloride; tall oil fatty acid, stearyl phosphate; a general-purpose silane coupling agent such as vinyltrichlorosilane, vinyl-tris silane, vinyltriethoxysilane, vinyltrimethoxysilane, $\gamma$-(methacryloxypropyl)trimethoxysilane, $\gamma$-glycidoxypropyltrimethoxysilane, $\gamma$-aminopropyltriethoxysilane, or $\gamma$-mercaptopropyltrimethoxysilane; and an imidazoline compound.

(Silane coupling agent)

By including a silane coupling agent in the asphalt composition of the present embodiment, when the asphalt composition and an aggregate are mixed, stripping of the asphalt composition from the aggregate tends to be able to be even further prevented.

Examples of the silane coupling agent include, but are not particularly limited to, one represented by the following formula.

$$((R^{26})_{n1}(X)_{n2})\text{-Si-}R^{27}\text{-S-}R^{28} \qquad \text{(Formula 1)}$$

In the (Formula 1), $R^{26}$ is a hydrocarbon group and optionally contains a heteroatom. X represents $-OR_2$ (wherein $R_2$ is a hydrocarbon group) or a halogen atom.

$R^{27}$ is a hydrocarbon group.

S represents sulfur.

$R^{28}$ represents hydrogen, a hydrocarbon group, or Si-$(R_5)(R_6)(R_7)$ (wherein $R_5$ to $R_7$ are each a hydrocarbon) .

n1 is an integer of 0 to 2, n2 is an integer of 1 to 3, and n1 + n2 = 3.

From the viewpoints of high softening point properties and economic efficiency, $R^{27}$ is preferably - $(CH_2)_3$-, $R^{28}$ is preferably $(Me)_3$, and $((R^{26})_{n1}(X)_{n2})$ is preferably $((MeO)_3)$ or $((EtO)_3)$.

Me represents a methyl group, and Et represents an ethyl group.

$$((R^{29})_{n3}(X)_{n4})\text{-Si-}R^{30}\text{-S}_{n6}\text{-}R^{30}\text{-Si-}(((R^{29})_{n6}(x)_{n7})) \qquad \text{(Formula 2)}$$

In the (Formula 2), $R^{29}$ is a hydrocarbon group and optionally contains a heteroatom.

A plurality of $R^{29}$ are present and are each optionally the same or different.

X represents $-OR_2$ (wherein $R_2$ is a hydrocarbon group) or a halogen atom.

$R^{30}$ is a hydrocarbon group. A plurality of $R^{30}$ are present and are each optionally the same or different.

S is sulfur.

n3 and n4 are each independently an integer of 0 to 3, and n3 + n4 = 3.

n5 is an integer of 1 or more, n6 and n7 are each independently an integer of 0 to 3, and n6 + n7 = 3.

n4 + n7 is an integer of 1 or more.

From the viewpoints of high softening point properties and economic efficiency, $R^{30}$ is preferably - $(CH_2)_3$-, $R^{28}$ is preferably $(Me)_3$, $((R^{29})_{n3}(X)_{n4})$ is preferably $((MeO)_3)$ or $((EtO)_3)$, and n5 is preferably 2 to 4.

Me represents a methyl group, and Et represents an ethyl group.

(Crosslinking agent)

The asphalt composition of the present embodiment can contain a crosslinking agent.

Examples of the crosslinking agent include, but are not limited to, sulfur, a sulfur compound, an inorganic vulcanizing agent other than sulfur, an oxime, a nitroso compound, polyamine, an organic peroxide, a resin crosslinking agent, an isocyanate compound, polyphosphoric acid, and a crosslinking coagent.

From the viewpoints of far superior high softening point properties, compatibility, and heat resistance stability, the crosslinking agent is preferably sulfur, a sulfur compound, or polyphosphoric acid.

The asphalt composition of the present embodiment preferably contains 0.01 to 10 parts by mass of a crosslinking agent per 100 parts by mass of the asphalt from the viewpoint of high softening point properties and excellent compatibility. The asphalt composition contains more preferably 0.05 to 8 parts by mass and further preferably 0.1 to 6 parts by mass of a crosslinking agent.

(Additive including sulfur and silicon)

The asphalt composition of the present embodiment preferably contains 0.05 to 10 parts by mass of an additive described above, particularly an additive including sulfur and silicon, per 100 parts by mass of the asphalt, from the viewpoint of high softening point properties and compatibility. Examples of the additive including sulfur and silicon include, but are not limited to, bis(triethoxysilylpropyl)tetrasulfide (TESPT), bis(triethoxysilylpropyl)disulfide (TESPD), 3-thiocyanatopropyltriethoxysilane, 3-mercaptopropyldi(tridecan-1oxy-13penta(ethylene-epoxide))ethoxysilane, and 3-triethoxysilyl-1-propyl thiooctanoate.
The content of the additive including sulfur and silicon is more preferably 0.1 to 9 parts by mass, and further preferably 0.2 to 8 parts by mass per 100 parts by mass of the asphalt.

(Rubber component)

The asphalt composition of the present embodiment may contain a rubber component other than the block copolymer (P) of the present embodiment described above (hereinafter, also simply referred to as a "rubber component").
Examples of the rubber component other than the above block copolymer (P) include, but are not limited to, a natural rubber and a synthetic rubber.
Examples of the synthetic rubber include, but are not limited to, an olefin elastomer such as polyisoprene rubber, polybutadiene rubber (BR), styrene butadiene rubber (SBR), modified styrene butadiene rubber (modified SBR), styrene-butadiene-styrene block copolymer (SBS), styrene-ethylene-butylene-styrene block copolymer (SEES), styrene-butylene-butadiene-styrene copolymer (SBBS), or ethylene propylene copolymer (EPDM); chloroprene rubber, acrylic rubber, ethylene vinyl acetate copolymer (EVA), ethylene-ethyl acrylate copolymer (EEA), and nitrile butadiene rubber (NBR).
As the rubber component other than the block copolymer (P), from the viewpoint of far superior compatibility and aggregate stripping resistance performance, polyisoprene rubber, polybutadiene rubber, styrene butadiene rubber, a styrene-butadiene-styrene block copolymer, a styrene-ethylene-butylene-styrene block copolymer, a styrene-butylene-butadiene-styrene copolymer, and an ethylene vinyl acetate copolymer are preferable, and polybutadiene rubber and a styrene-butadiene-styrene block copolymer are more preferable.
The rubber component other than the block copolymer (P) may have a functional group. As the rubber component other than the block copolymer (P), an olefin elastomer and an olefin elastomer having a functional group are preferable from the viewpoint of far superior flow resistance of the asphalt composition of the present embodiment.
When the rubber component other than the block copolymer (P) has a functional group, examples of the functional group include a hydroxyl group, an acid anhydride group, an epoxy group, an amino group, an amide group, an imino group, an imide group, a urea group, a urethane group, an isocyanate group, an amidine group, a guanidine group, a carbodiimide group, a carboxyl group, a carbonyl group, a silanol group, and an alkoxysilyl group, and the rubber component preferably has at least one functional group selected from the group consisting of these.
Such rubber components other than the block copolymer (P) may be used singly or can be used in combinations of two or more thereof.
The content of the rubber component other than the block copolymer (P) in the asphalt composition of the present embodiment is preferably 0.5 parts by mass or more and 400 parts by mass or less, more preferably 0.5 parts by mass or more and 300 parts by mass or less, further preferably 1 part by mass or more and 200 parts by mass or less, and further more preferably 5 parts by mass or more and 150 parts by mass or less, per 100 parts by mass of the block copolymer (P). When the content of the rubber component other than the block copolymer (P) is in the range, the compatibility and the aggregate stripping resistance performance of the asphalt composition of the present embodiment tend to be far superior.

(Resin component other than block copolymer (P))

The asphalt composition of the present embodiment may contain a resin component other than the block copolymer (P) of the present embodiment.
Examples of the resin component other than the block copolymer (P) of the present embodiment include, but are not limited to, a thermoplastic resin such as polyethylene (PE), low density polyethylene (low density PE), polypropylene (PP), polyvinyl chloride (PVC), polyamide (PA), polystyrene (PS), acrylic resin, polycarbonate (PC), polyethylene terephthalate (PET), polybutylene terephthalate (PBT), polyvinylidene fluoride (PVDF), Teflon (registered trademark) (PTFE), polyether ether ketone (PEEK), polyphenylene ether (PPE), polyphenylene sulfide (PPS), polyimide (PI), or polyamideimide (PAI).
As the resin component other than the block copolymer (P) of the present embodiment, polyethylene (PE), low density polyethylene (low density PE), polyvinyl chloride (PVC), polyamide (PA), and polyethylene terephthalate (PET) are more preferable from the viewpoint of far superior compatibility and aggregate stripping resistance performance.

The resin component other than the block copolymer (P) of the present embodiment may have a functional group.

When the resin component other than the block copolymer of the present embodiment has a functional group, examples of the functional group include a hydroxyl group, an acid anhydride group, an epoxy group, an amino group, an amide group, an imino group, an imide group, a urea group, a urethane group, an isocyanate group, an amidine group, a guanidine group, a carbodiimide group, a carboxyl group, a carbonyl group, a silanol group, and an alkoxysilyl group, and the resin component preferably has at least one functional group selected from the group consisting of these.

Such resin components other than the block copolymer (P) may be used singly or in combinations of two or more thereof.

The content of the resin component other than the block copolymer (P) in the asphalt composition of the present embodiment is preferably 0.5 parts by mass or more and 400 parts by mass or less, more preferably 0.5 parts by mass or more and 300 parts by mass or less, further preferably 1 part by mass or more and 200 parts by mass or less, and further more preferably 5 parts by mass or more and 150 parts by mass or less, per 100 parts by mass of the block copolymer (P).

When the content of the resin component other than the block copolymer (P) is in the above range, the compatibility and the aggregate stripping resistance performance of the asphalt composition of the present embodiment tend to even further improve.

The asphalt composition of the present embodiment may contain a polymer mainly composed of a vinyl aromatic monomer unit having a weight average molecular weight (Mw) of 5,000 or more and 30,000 or less (hereinafter, also referred to as a "low molecular weight vinyl aromatic polymer") as a resin component other than the block copolymer (P).

The low molecular weight vinyl aromatic polymer is preferably mainly composed of the vinyl aromatic monomer unit contained in the polymer block (A) constituting the block copolymer (P), and is more preferably mainly composed of a monomer unit derived from polystyrene.

The lower limit of the content of the low molecular weight vinyl aromatic polymer is preferably 0.5 parts by mass or more, more preferably 1.0 part by mass or more, further preferably 2.0 parts by mass or more, and further more preferably 3.0 parts by mass or more per 100 parts by mass of the block copolymer (P) from the viewpoint of far superior low melt viscosity of the asphalt composition of the present embodiment. In addition, the upper limit of the content of the low molecular weight vinyl aromatic polymer is preferably 5.0 parts by mass or less, more preferably 4.0 parts by mass or less, further preferably 3.0 parts by mass or less, and further more preferably 2.0 parts by mass or less per 100 parts by mass of the block copolymer (P) from the viewpoint of far superior high softening point properties of the asphalt composition of the present embodiment.

A commercially available low molecular weight vinyl aromatic polymer may be mixed with the block copolymer (P) of the present embodiment.

(Warm mix additive)

The asphalt composition of the present embodiment may contain a warm mix additive for the purpose of mixing, paving, and compacting the modified asphalt mixture of the present embodiment described later at a temperature lower than usual.

Examples of the warm mix additive include, but are not limited to, beeswax, Japan wax, ozokerite, paraffin wax, microcrystalline wax, carnauba wax, Montan (registered trademark) wax from coal, Fischer-Tropsch wax derived from coal, petroleum, or gas, B2Last (registered trademark), Sasobit (registered trademark), SANWAX (registered trademark), EPOLENE (registered trademark), Allied Wax (registered trademark), amide wax, polyethylene wax, a fatty acid, a fatty acid amide, a soap, an aliphatic alcohol, a hydrogenated fat, an aliphatic ester, and a mixture thereof.

[Method for producing block copolymer]

Examples of the method for producing the block copolymer (P) of the present embodiment include, but are not limited to, a production method including carrying out a polymerization step of polymerizing at least a conjugated diene and a vinyl aromatic compound in a hydrocarbon solvent using a lithium compound as a polymerization initiator to obtain a block copolymer containing a polymer block (A) mainly composed of a vinyl aromatic monomer unit and a polymer block (B) mainly composed of a conjugated diene monomer unit, and carrying out a desolventization step of desolventizing a solution including the block copolymer (P) obtained.

The polymer block (B) is preferably a polymer block (C) consisting of the vinyl aromatic monomer unit and the conjugated diene monomer unit.

In the polymerization step, a block copolymer can be obtained, for example by polymerizing a monomer containing at least a conjugated diene and a vinyl aromatic compound in a hydrocarbon solvent using a lithium compound as a polymerization initiator.

Examples of the hydrocarbon solvent used in the polymerization step include, but are not limited to, an aliphatic hydrocarbon such as butane, pentane, hexane, isopentane, heptane, or octane; an alicyclic hydrocarbon such as cyclopentane, methylcyclopentane, cyclohexane, methylcyclohexane, or ethylcyclohexane; and an aromatic hydrocarbon such as benzene, toluene, ethylbenzene, or xylene.

These hydrocarbon solvents may be used singly or in combinations of two or more thereof.

Examples of the lithium compound used as a polymerization initiator in the polymerization step include, but are not limited to, a compound in which one or more lithium atoms are bonded in a molecule such as an organomonolithium compound, an organodilithium compound, or an organopolylithium compound. Examples of such an organolithium compound include, but are not limited to, ethyllithium, n-propyllithium, isopropyllithium, n-butyllithium, sec-butyllithium, tert-butyllithium, hexamethylenedilithium, butadienyldilithium, and isoprenyldilithium.

These lithium compounds may be used singly or in combinations of two or more thereof.

Examples of the conjugated diene include, but are not limited to, a diolefin having a pair of conjugated double bonds such as 1,3-butadiene, 2-methyl-1,3-butadiene (isoprene), 2,3-dimethyl-1,3-butadiene, 1,3-pentadiene, 2-methyl-1,3-pentadiene, or 1,3-hexadiene.

Among these, 1,3-butadiene and isoprene are preferable.

In addition, 1,3-butadiene is more preferable from the viewpoint of further improving the mechanical strength.

These conjugated dienes can be used singly or in combinations of two or more thereof.

Examples of the vinyl aromatic compound include, but are not limited to, styrene, $\alpha$-methylstyrene, p-methylstyrene, divinylbenzene, 1,1-diphenylethylene, N,N-dimethyl-p-aminoethylstyrene, or N,N-diethyl-p-aminoethylstyrene.

Among these, styrene is preferable from the viewpoint of excellent economic efficiency.

These vinyl aromatic compounds can be used singly or in combinations of two or more thereof.

In the polymerization step, a monomer other than the conjugated diene and the vinyl aromatic compound may be used in combination. As such a monomer, a monomer copolymerizable with the conjugated diene and/or the vinyl aromatic compound can be used, and can be used in a predetermined amount added.

In the polymerization step, a polar compound and/or a randomizing agent can be used, for example in order to adjust the polymerization rate, adjust the microstructure (ratio of cis, trans, and vinyl bond content) of the polymerized conjugated diene monomer unit, or adjust the ratio of reaction between the conjugated diene and the vinyl aromatic compound.

Examples of the polar compound or the randomizing agent include, but are not limited to, an ether such as tetrahydrofuran, diethylene glycol dimethyl ether, or diethylene glycol dibutyl ether; an amine such as triethylamine, N,N,N',N'-tetramethylethylenediamine (hereinafter, also referred to as "TMEDA"); a thioether, a phosphine, a phosphoramide, an alkylbenzene sulfonate, and an alkoxide of potassium or sodium.

The polymerization method to be carried out in the polymerization step of the block copolymer is not particularly limited, and a known method can be applied, and examples thereof include methods disclosed in Japanese Patent Publication No. 36-19286, Japanese Patent Publication No. 43-17979, Japanese Patent Publication No. 46-32415, Japanese Patent Publication No. 49-36957, Japanese Patent Publication No. 48-2423, Japanese Patent Publication No. 48-4106, Japanese Patent Publication No. 56-28925, Japanese Patent Laid-Open No. 59-166518, Japanese Patent Laid-Open No. 60-186577, and the like.

The block copolymer (P) of the present embodiment may be produced, for example, by a polymerization step of copolymerizing a vinyl aromatic compound such as styrene and a conjugated diene such as butadiene using an organic lithium compound as a polymerization initiator in an inert hydrocarbon solvent to obtain a block copolymer, and a modification step (coupling step) of reacting the obtained block copolymer and a modifying agent (this compound is collectively referred to as a modifying agent when bonded to one or more polymers, and also referred to as a coupling agent when the modifying agent is bonded to two or more polymers).

The coupling agent is not particularly limited, and any bifunctional or higher functional coupling agent can be used.

Examples of the bifunctional coupling agent include, but are not limited to, a bifunctional halogenated silane such as dichlorosilane, monomethyldichlorosilane, or dimethyldichlorosilane; a bifunctional alkoxysilane such as diphenyldimethoxysilane, diphenyldiethoxysilane, dimethyldimethoxysilane, or dimethyldiethoxysilane; a bifunctional halogenated alkane such as dichloroethane, dibromoethane, methylene chloride, or dibromomethane; a bifunctional halogenated tin such as dichlorotin, monomethyldichlorotin, dimethyldichlorotin, monoethyldichlorotin, diethyldichlorotin, monobutyldichlorotin, or dibutyldichlorotin; dibromobenzene, benzoic acid, CO, and 2-chloropropene.

Examples of the trifunctional coupling agent include, but are not limited to, a trifunctional halogenated alkane such as trichloroethane or trichloropropane; a trifunctional halogenated silane such as methyltrichlorosilane or ethyltrichlorosilane; and a trifunctional alkoxysilane such as methyltrimethoxysilane, phenyltrimethoxysilane, or phenyltriethoxysilane.

Examples of the tetrafunctional coupling agent include, but are not limited to, a tetrafunctional halogenated alkane such as carbon tetrachloride, carbon tetrabromide, or tetrachloroethane; a tetrafunctional halogenated silane such as tetrachlorosilane or tetrabromosilane; a tetrafunctional alkoxysilane such as tetramethoxysilane or tetraethoxysilane; and a tetrafunctional halogenated tin such as tetrachlorotin or tetrabromotin.

Examples of the pentafunctional or higher functional coupling agent include, but are not limited to, a polyhalogenated hydrocarbon compound such as 1,1,1,2,2-pentachloroethane, perchloroethane, pentachlorobenzene, perchlorobenzene, octabromodiphenyl ether, or decabromodiphenyl ether. In addition thereto, epoxidized soybean oil, a bi- to hexafunctional epoxy group-containing compound, a carboxylic acid ester, and a polyvinyl compound such as divinylbenzene can also be used.

These coupling agents may be used singly or in combinations of two or more thereof.

In the production step of the block copolymer (P) of the present embodiment, a deactivation step of deactivating an active end of the block copolymer (P) after the polymerization step is preferably carried out.

By reacting a compound having active hydrogen with the active end, the active end of the block copolymer can be deactivated. The compound having active hydrogen is not particularly limited, and is preferably an alcohol or water from the viewpoint of excellent economic efficiency.

In the method for producing the block copolymer (P) of the present embodiment, it is possible to use a compound having at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group as a polymerization initiator, a polymerization monomer, a coupling agent, or a polymerization terminator, and thereby it is possible to add at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group to the block copolymer (including a partially hydrogenated block copolymer) obtained.

As the polymerization initiator having a functional group, a polymerization initiator containing a nitrogen-containing group is preferable.

Examples of the polymerization initiator containing a nitrogen-containing group include, but are not limited to, dioctylaminolithium, di-2-ethylhexylaminolithium, ethylbenzylaminolithium, (3-(dibutylamino)-propyl)lithium, and piperidinolithium.

As the polymerization monomer having a functional group, a polymerization monomer containing a nitrogen-containing group is more preferable. Examples of the polymerization monomer having a nitrogen-containing group include, but are not limited to, N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine, and 1-(4-vinylbenzyloxymethyl)pyrrolidine.

Examples of the coupling agent and the polymerization terminator including a functional group include a coupling agent and a polymerization terminator having at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group, among the coupling agents and the polymerization terminators described above.

These coupling agents and polymerization terminators having a functional group may be used singly or in combinations of two or more thereof.

Among these, a coupling agent and a polymerization terminator having a nitrogen-containing group or an oxygen-containing group are further preferable from the viewpoint of good dynamic stability and water resistance of the modified asphalt mixture of the present embodiment described later.

Examples of the coupling agent and polymerization terminator having a nitrogen-containing group or an oxygen-containing group include, but are not limited to, N,N,N',N'-tetraglycidylmetaxylenediamine, tetraglycidyl-1,3-bisaminomethylcyclohexane, tetraglycidyl-p-phenylenediamine, tetraglycidyldiaminodiphenylmethane, diglycidylaniline, γ-caprolactone, γ-glycidoxyethyltrimethoxysilane, γ-glycidoxypropyltrimethoxysilane, γ-glycidoxypropyltriphenoxysilane, γ-glycidoxypropylmethyldimethoxysilane, γ-glycidoxypropyldiethylethoxysilane, 1,3-dimethyl-2-imidazolidinone, 1,3-diethyl-2-imidazolidinone, N,N'-dimethylpropyleneurea, N-methylpyrrolidone, 2,2-dimethoxy-1-(3-trimethoxysilylpropyl)-1-aza-2-silacyclopentane, and 3-(4-methylpiperazin-1-yl)propyltriethoxysilane.

In addition, the block copolymer (P) of the present embodiment may have a main chain branching structure. The main chain branching structure refers to a structure in which a polymer chain forms a branch point in a moiety derived from a vinyl monomer including an alkoxysilyl group or a halosilyl group, and a polymer chain extends from the branch point.

The main chain branching structure has 2 or more branches, preferably 3 or more branches, and more preferably 4 or more branches at a branch point in a moiety derived from a vinyl monomer including an alkoxysilyl group or a halosilyl group from the viewpoint of the high softening point properties and the low melt viscosity.

The main chain branching structure can be formed by reacting a branching agent after the polymerization step.

Examples of the branching agent that forms the main chain branching structure include, but are not limited to, the following.

Examples thereof include trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, and triisopropoxy(2-vinylphenyl) silane.

Further examples thereof include dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, and diisopropoxymethyl(2-vinylphenyl)silane.

Further examples thereof include dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinyl phenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, and dimethylisopropoxy(2-vinylphenyl) silane.

Further examples thereof include trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, and triisopropoxy(2-isopropenylphenyl)silane.

Further examples thereof include dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, and diisopropoxymethyl(2-isopropenylphenyl)silane.

Further examples thereof include dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, and dimethylisopropoxy(2-isopropenylphenyl)silane.

Further examples thereof include trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

In the method for producing the block copolymer (P) of the present embodiment, a hydrogenation step may be carried out. That is, the block copolymer (P) of the present embodiment may be a hydrogenated product of a block copolymer having a polymer block (A) and a polymer block (B).

The hydrogenation method is not particularly limited, and can be carried out using a known technique that uses a hydrogenation catalyst.

The hydrogenation catalyst is not particularly limited, a known catalyst can be used, and for example, a supported heterogeneous hydrogenation catalyst in which a metal such as Ni, Pt, Pd, or Ru is supported on carbon, silica, alumina, diatomaceous earth, or the like; a so-called Ziegler-type hydrogenation catalyst that uses an organic acid salt of Ni, Co, Fe, Cr, or the like or a transition metal salt such as an acetylacetone salt and a reducing agent such as organic aluminum; and a homogeneous hydrogenation catalyst such as a so-called organometallic complex such as an organometallic compound of Ti, Ru, Rh, Zr, or the like can be used.

Examples of the hydrogenation catalyst include hydrogenation catalysts disclosed in Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, and Japanese Patent Publication No. 2-9041.

Among these, suitable hydrogenation catalysts include a titanocene compound, a reducing organometallic compound, or a mixture thereof.

Examples of the titanocene compound include, but are not limited to, compounds disclosed in Japanese Patent Laid-Open No. 8-109219. Specific examples thereof include a compound having at least one or more ligands having a (substituted) cyclopentadienyl skeleton, indenyl skeleton, or fluorenyl skeleton such as biscyclopentadienyltitanium dichloride or monopentamethylcyclopentadienyltitanium trichloride.

Examples of the reducing organometallic compound include, but are not limited to, an organoalkali metal compound such as organolithium, an organomagnesium compound, an organoaluminum compound, an organoboron compound, and an organozinc compound.

The hydrogenation reaction temperature is preferably 0 to 200°C, and more preferably 30 to 150°C. In addition, the pressure of hydrogen used in the hydrogenation reaction is preferably 0.1 to 15 MPa, more preferably 0.2 to 10 MPa, and further preferably 0.3 to 5 MPa. Further, the hydrogenation reaction time is preferably 3 minutes to 10 hours, and more preferably 10 minutes to 5 hours.

The hydrogenation reaction may be any of a batch process, a continuous process, or a combination thereof.

The block copolymer (P) can be obtained by optionally removing the catalyst residue from a solution of the block copolymer (P) obtained through the hydrogenation reaction and separating the solution. The method for separating the solvent is not particularly limited, and examples thereof include a method involving precipitating and collecting the block copolymer by adding a polar solvent, such as acetone or an alcohol, which is a poor solvent for the hydrogenated block copolymer, to the reaction solution after hydrogenation, a method involving collecting the block copolymer by pouring the reaction solution after hydrogenation into boiling water with stirring and removing the solvent by steam stripping, and a method involving heating the reaction solution after hydrogenation to distill off the solvent.

In the desolventization step, the polymer solution including the block copolymer (P) is desolventized. A desolventization method is not particularly limited, and examples thereof include a steam stripping method and a direct solvent removal method.

The amount of the residual solvent in the block copolymer (P) obtained by the desolventization step may be as small as possible, and is preferably 2% by mass or less, more preferably 0.5% by mass or less, further preferably 0.2% by mass or less, further more preferably 0.05% by mass or less, even further preferably 0.01% by mass or less, and particularly preferably 0% by mass. Usually, the amount of the residual solvent in the block copolymer (P) is preferably 0.01% by mass or more and 0.1% by mass or less from the viewpoint of excellent economic efficiency.

An antioxidant exemplified in the section of the asphalt composition is preferably added to the block copolymer (P) from the viewpoints of making the heat resistance stability of the block copolymer (P) far superior and suppressing gelation.

The block copolymer (P) of the present embodiment also includes a case in which a further additive such as an antioxidant is added as long as the effects of the present invention are not impaired to form a composition.

From the viewpoints of preventing coloring of the block copolymer (P) and improving the mechanical strength, before the desolventization step, a decalcification step of removing a metal in the solution including the block copolymer (P), or a neutralization step of adjusting the pH of the solution including the block copolymer (P) may be carried out, and for example, an acid and/or carbon dioxide gas may be added.

[Method for producing asphalt composition]

The asphalt composition of the present embodiment can be produced by mixing an asphalt and 0.5 parts by mass or more and 30 parts by mass or less of the block copolymer (P) per 100 parts by mass of the asphalt.

In the method for producing the asphalt composition of the present embodiment, a crosslinking agent is preferably added.

From the viewpoint of sufficiently reacting the block copolymer (P) with the crosslinking agent, the mixing time after adding the crosslinking agent to the asphalt composition is preferably 20 minutes or more, more preferably 40 minutes or more, further preferably 60 minutes or more, and further more preferably 90 minutes or more. In addition, from the viewpoint of suppressing thermal degradation of the block copolymer (P), the mixing time after adding the crosslinking agent to the asphalt composition is preferably 5 hours or less, and more preferably 3 hours or less.

The mixing method in the method for producing the asphalt composition is not particularly limited, and any mixing machine can be used.

The mixing machine is not particularly limited, and examples thereof include a melt kneading machine such as an extruder, a kneader, or a Banbury mixer, a stirring machine such as a vertical impeller and a side arm type impeller, a homogenizer including an emulsifying machine, and a pump.

In the method for producing the asphalt composition of the present embodiment, an asphalt, the block copolymer (P), a crosslinking agent, and any additive, are preferably mixed in the range of 140°C to 220°C using a stirring tank or the like.

[Modified asphalt mixture]

The modified asphalt mixture of the present embodiment contains 3 parts by mass or more and 15 parts by mass or less of the asphalt composition of the present embodiment described above, and 100 parts by mass of an aggregate.

The aggregate is not particularly limited, and for example, any aggregate for a pavement material described in the "Outline of Asphalt Pavement" issued by the Japan Road Association can be used.

Examples of the aggregate include, but are not limited to, crushed stone, a boulder, gravel, and steel slag.

In addition, an asphalt-coated aggregate obtained by coating any of the above aggregates with an asphalt, a recycled aggregate, and the like can also be used.

In addition thereto, as an aggregate, a granular material similar to the aggregates described above, an artificial fired aggregate, a fired foam aggregate, an artificial lightweight aggregate, a pottery particle, Luxovite, an aluminum particle, a plastic particle, a ceramic, emery, a construction waste, a fiber, and the like can also be used.

In general, aggregates are roughly classified into a coarse aggregate, a fine aggregate, and a filler, and the aggregate used in the modified asphalt mixture of the present embodiment may be any of a coarse aggregate, a fine aggregate, and a filler.

The coarse aggregate refers to an aggregate that is retained on a 2.36-mm sieve, and examples of the type of the coarse aggregate generally include No. 7 crushed stone having a particle size range of 2.5 mm or more and 5 mm or less, and No. 6 crushed stone having a particle size range of 5 mm or more and 13 mm or less, No. 5 crushed stone having a particle size range of 13 mm or more and 20 mm or less, and No. 4 crushed stone having a particle size range of 20 mm or more and 30 mm or less.

In the modified asphalt mixture of the present embodiment, an aggregate obtained by mixing one or two or more of these coarse aggregates having various particle size ranges, a synthesized aggregate, or the like can be used.

These coarse aggregates may be coarse aggregates coated with about 0.3% by mass or more and 1% by mass or less of straight asphalt.

The fine aggregate refers to an aggregate that passes through a 2.36-mm sieve and stops (stays) on a 0.075-mm sieve. Examples of the fine aggregate include, but are not limited to, river sand, hill sand, mountain sand, sea sand, screenings, crushed stone dust, silica sand, artificial sand, glass cullet, casting sand, a recycled aggregate, and crushed sand.

The filler is preferably an aggregate that passes through a 0.075-mm sieve. Examples of such a filler include, but are not limited to, a filler component of screenings, stone powder, slaked lime, cement, incinerator ash, clay, talc, calcium carbonate, fly ash, and carbon black. In addition thereto, as the filler, a rubber powder particle, a cork powder particle, a wood powder particle, a resin powder particle, a fiber powder particle, pulp, an artificial aggregate, and the like that pass through a 0.075-mm sieve can also be used.

These aggregates may be used singly or in combinations of two or more thereof.

The modified asphalt mixture of the present embodiment can be produced by at least mixing the asphalt composition and an aggregate described above, and the mixing method is not particularly limited.

The temperature at which the asphalt composition and an aggregate described above are mixed can be usually in the range of 120°C or more and 200°C or less.

The content of the asphalt composition based on the whole modified asphalt mixture of the present embodiment is preferably 3 parts by mass or more and 15 parts by mass or less, more preferably 4 parts by mass or more and 12 parts by mass or less, and further preferably 4 parts by mass or more and 9 parts by mass or less per 100 parts by mass of the aggregate, from the viewpoint of obtaining a modified asphalt mixture having excellent mass loss resistance and excellent strength reduction resistance at the time of oil attachment.

In the modified asphalt mixture, which is a mixture of the asphalt composition and an aggregate, a portion containing only a fine particle aggregate corresponds to the asphalt composition. Here, the fine particle aggregate refers to an aggregate obtained by grinding a coarse aggregate or a fine aggregate, and the median diameter D50 of the particle size distribution of the size is preferably 75 $\mu$m or less, more preferably 65 $\mu$m or less, further preferably 55 $\mu$m or less, and further more preferably 45 $\mu$m or less, from the viewpoint of solubility.

As a method for producing the modified asphalt mixture of the present embodiment, for example, a so-called plant mix method in which when an asphalt composition and an aggregate are mixed, the block copolymer (P) of the present embodiment is directly mixed to modify the asphalt can be used.

[Uses of asphalt composition and modified asphalt mixture]

The asphalt composition and the modified asphalt mixture of the present embodiment can be used in various uses disclosed in The Shell Bitumen Handbook edited by D. Whiteoak and published by Shell Bitumen U.K. in the United Kingdom in 1990.

In addition, other uses include a waterproofing sheet, roof coating, a primer adhesive for a waterproofing sheet, a sealing binder for pavement, an adhesive for recycled asphalt pavement, a binder for cold prepared asphaltic concrete, a fiberglass mat binder, a slip coat for concrete, a protective coat for concrete, and sealing of a crack in a pipeline and an iron part.

Examples of the pavement form using the modified asphalt mixture of the present embodiment include, but are not limited to, a dense-graded pavement form, a drainage pavement form, a permeable pavement form, a dense-graded gap asphalt pavement form, a crushed stone mastic asphalt pavement form, a colored pavement form, a semi-flexible pavement form, a water-retaining pavement form, and a thin-layer pavement form.

In addition, the method for obtaining each pavement form is not particularly limited, and examples thereof include a hot method, a warm method, and a cold method.

The modified asphalt mixture used in the dense-grained pavement form preferably contains 40% by mass or more and 55% by mass or less of a coarse aggregate, 40% by mass or more and 55% by mass or less of a fine aggregate, and 3% by mass or more and 10% by mass or less of a filler when the total amount of the aggregate is 100% by mass, from the viewpoint of even further improving the flow resistance and the skid resistance. In the modified asphalt mixture used in the dense-grained pavement form, the asphalt composition is preferably 5 parts by mass or more and 7 parts by mass or less per 100 parts by mass in total of the aggregate, and in the modified asphalt mixture, the block copolymer (P) of the present embodiment is preferably 3 parts by mass or more and 5.5 parts by mass or less per 100 parts by mass of the asphalt.

The modified asphalt mixture used in the drainage pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the drainage, the visibility, and the noise properties.

In the modified asphalt mixture used in the drainage pavement form, the asphalt composition is preferably 4 parts by mass or more and 6 parts by mass or less per 100 parts by mass in total of the aggregate, and in the modified asphalt mixture, the block copolymer (P) of the present embodiment is preferably 5 parts by mass or more and 10 parts by mass or less per 100 parts by mass of the asphalt.

The modified asphalt mixture used in the permeable pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the permeability.

In the modified asphalt mixture used in the permeable pavement form, the above asphalt composition is preferably 4 parts by mass or more and 6 parts by mass or less per 100 parts by mass of the aggregate, and in the modified asphalt mixture, the block copolymer (P) of the present embodiment is preferably more than 0 parts by mass and 6 parts by mass or less per 100 parts by mass of the asphalt.

The modified asphalt mixture used in the dense-grained gap pavement form preferably contains 50% by mass or more and 60% by mass or less of a coarse aggregate, 30% by mass or more and 40% by mass or less of a fine aggregate, and 3% by mass or more and 10% by mass or less of a filler when the total amount of the aggregate is 100% by mass, from the viewpoint of even further improving the wearability, the flow resistance, the durability, and the skid resistance.

In the modified asphalt mixture used in the dense-grained gap pavement form, the asphalt composition is preferably 4.5 parts by mass or more and 6 parts by mass or less per 100 parts by mass of the aggregate, and in the modified asphalt mixture, the block copolymer (P) of the present embodiment is preferably 5 parts by mass or more and 12 parts by mass or less per 100 parts by mass of the asphalt.

The modified asphalt mixture used in the crushed stone mastic asphalt pavement form preferably contains 55% by mass or more and 70% by mass or less of a coarse aggregate, 15% by mass or more and 30% by mass or less of a fine aggregate, and 5% by mass or more and 15% by mass or less of a filler when the total amount of the aggregate is 100% by mass, from the viewpoint of even further improving the wear resistance, non-permeability, the stress relaxation, the flow resistance, and the noise properties.

In the modified asphalt mixture used in the crushed stone mastic asphalt pavement form, the asphalt composition is preferably 5.5 parts by mass or more and 8 parts by mass or less per 100 parts by mass of the aggregate, and in the modified asphalt mixture, the block copolymer of the present embodiment is preferably 4 parts by mass or more and 10 parts by mass or less per 100 parts by mass of the asphalt.

The modified asphalt mixture used in the water-retaining pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoints of even further suppressing increase in pavement temperature and even further improving the water retention.

In the modified asphalt mixture used in the water-retaining pavement form, the asphalt composition is preferably 4 parts by mass or more and 6 parts by mass or less per 100 parts by mass of the aggregate, and in the modified asphalt mixture, the block copolymer of the present embodiment is preferably 4 parts by mass or more and 10 parts by mass or less per 100 parts by mass of the asphalt. The modified asphalt mixture used in the water-retaining pavement form preferably has a voidage of about 15% or more and 20% or less, and a void is preferably filled with a water-retaining material such as a cement or a gypsum.

The modified asphalt mixture used in the thin-layer pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the economic efficiency, the shortening of the construction period, and the workability.

In the modified asphalt mixture used in the thin-layer pavement form, the asphalt composition is preferably 4 parts by mass or more and 6.5 parts by mass or less per 100 parts by mass in total of the aggregate, and in the modified asphalt mixture, the block copolymer of the present embodiment is preferably 4 parts by mass or more and 8 parts by mass or less per 100 parts by mass of the asphalt. In the modified asphalt mixture used in the thin-layer pavement form, the coarse aggregate is preferably a No. 7 crushed stone having a particle size range of 2.5 mm or more and 5 mm or less.

The asphalt composition of the present embodiment can also be suitably used for an asphalt waterproofing sheet. When the asphalt composition of the present embodiment is used, the softening point of the asphalt waterproofing sheet can be increased, and the low temperature bendability can be improved.

In addition, the method for obtaining each pavement form is not particularly limited, and examples thereof include a hot method, a warm method, and a cold method.

Examples

Hereinafter, the present invention will be described in detail with reference to specific Examples and Comparative Examples, but the present invention is not limited at all by the following Examples and Comparative Examples.

[Methods for measuring physical properties of block copolymer]

The methods for measuring physical properties of the block copolymer are shown below.

(Measurement of vinyl bond content derived from conjugated diene monomer in block copolymer)

The vinyl bond content derived from the conjugated diene in the block copolymer was measured by nuclear magnetic resonance spectrum analysis (NMR) under the following conditions.

By adding a large amount of methanol to a reaction solution containing the block copolymer, the block copolymer was precipitated and collected. This block copolymer was then extracted with acetone and the block copolymer was vacuum dried. Using this block copolymer as a sample for $^1$H-NMR measurement, the vinyl bond content derived from the conjugated diene in the block copolymer was measured.

The conditions for $^1$H-NMR measurement are described below.

Measuring instrument: JNM-LA400 (manufactured by JEOL)
Solvent: Deuterated chloroform
Measurement sample: The dried block copolymer described above
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

(Measurement of hydrogenation rate of double bond in conjugated diene monomer unit in block copolymer)

The hydrogenation rate of the double bond in the conjugated diene monomer unit in the block copolymer was measured using a nuclear magnetic resonance spectrometer (NMR) under the following conditions. First, by adding a large amount of methanol to a reaction solution after hydrogenation reaction, the block copolymer was precipitated and collected. Next, the block copolymer was extracted with acetone, and the extract was vacuum dried to obtain a block copolymer. The obtained block copolymer was used as a sample for $^1$H-NMR measurement. The conditions for $^1$H-NMR measurement are described below.

(Measurement conditions)

Measuring instrument: JNM-LA400 (manufactured by JEOL)
Solvent: Deuterated chloroform
Measurement sample: Polymers sampled before and after hydrogenation
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

(Measurement of mass proportion (hereinafter also referred to as "TS") of vinyl aromatic monomer unit (styrene) in block copolymer)

A certain amount of the block copolymer was dissolved in chloroform, and the peak intensity at an absorption wavelength (262 nm) due to the vinyl aromatic monomer component (styrene) in the solution was measured using an ultraviolet spectrophotometer (UV-2450, manufactured by Shimadzu Corporation).
From the resulting peak intensity, the mass proportion (TS) of the vinyl aromatic monomer unit (styrene) in the block copolymer was calculated using a calibration curve.

(Measurement of mass proportion (hereinafter also referred to as "BS") of polymer block (A) mainly composed of vinyl aromatic monomer unit in block copolymer)

A large amount of methanol was added to a reaction solution containing the block copolymer to precipitate an undegraded component, followed by filtration using a glass filter and drying. This block copolymer was used as a measurement sample.
The mass proportion (BS) of the polymer block (A) mainly composed of the vinyl aromatic monomer unit in the block copolymer was measured using the following solution for polymer decomposition by the osmium tetroxide decomposition method disclosed in I. M. Kolthoff, et al., J. Polym. Sci., 1946, Vol.1, p.429.

Measurement sample: The dried block copolymer described above
Solution for polymer decomposition: A solution of 0.1 g of osmium tetroxide in 125 mL of tertiary butanol

(Mass proportion of vinyl aromatic monomer unit in polymer blocks (B) and (C) (hereinafter also referred to as "RS"))

In the block copolymer, the mass proportion (RS) of the vinyl aromatic monomer unit in the polymer block (B) and the polymer block (C) was calculated by the following expression (II).

$$RS = (TS - BS)/(100 - BS) \times 100 \quad (II)$$

The polymer block (C) is the polymer block (B) and is a polymer block consisting of the vinyl aromatic unit and the conjugated diene monomer unit.
TS is the mass proportion of the vinyl aromatic monomer unit in the block copolymer (P).
BS is the mass proportion of the polymer block (A) in the block copolymer (P).

(Method for measuring peak molecular weight (BSPMw) of polymer block (A))

The sample for measuring the mass proportion (BS) of the polymer block (A) was analyzed by GPC.

The measurement was carried out with the same analysis conditions as those described in (Measurement of weight average molecular weight (Mw) and molecular weight distribution (Mw/Mn) of block copolymer) below.

The peak molecular weight (BSPMw) of the polymer block (A) was determined from the obtained molecular weight distribution. When the molecular weight distribution is multimodal, BSPMw is the number average molecular weight instead of the peak molecular weight.

(Measurement of number average molecular weight (Mn), weight average molecular weight (Mw), polystyrene-equivalent peak molecular weight (PMwA), and molecular weight distribution (Mw/Mn) of block copolymer)

The number average molecular weight (Mn), the weight average molecular weight (Mw), and the polystyrene-equivalent peak molecular weight (PMwA) of the block copolymer were determined based on the peak molecular weight on a chromatogram by using the calibration curve (prepared using the peak molecular weight of standard polystyrene) obtained from measurement of a commercially available standard polystyrene. The polystyrene-equivalent peak molecular weight (PMwA) is a value of the peak top molecular weight.

The measurement software used was HLC-8320 EcoSEC collection, and the analysis software used was HLC-8320 analysis. In addition, the molecular weight distribution (Mw/Mn) of the block copolymer was determined from the ratio of the polystyrene-equivalent weight average molecular weight (Mw) and the number average molecular weight (Mn). The measurement conditions are shown below.

GPC: HLC-8320GPC (manufactured by Tosoh Corporation)
Detector: RI (differential refractive index) detector
Detection sensitivity: 3 mV/min
Sampling pitch: 600 msec
Column: 4 pieces of TSKgel superHZM-N (6 mm ID $\times$ 15 cm) (manufactured by Tosoh Corporation)
Solvent: THF (tetrahydrofuran)
Flow rate: 0.6 mm/min
Concentration: 0.5 mg/mL
Column temperature: 40°C
Injection volume: 20 $\mu$L

(Measurement of (a), (b-1), and (b-2) components included in block copolymer)

The block copolymer was analyzed by GPC as follows to determine the ratios (% by mass) and the peak molecular weights of the following components (a), (b-1), and (b-2).

Component (a): A block copolymer that consists of the polymer block (A), the polymer block (B) (excluding the structure of the polymer block (C)), and the polymer block (C) and has a peak molecular weight of 50,000 or more and less than 160,000.

Component (b-1): A block copolymer that is a component in which the ratio of the peak molecular weight thereof to the peak molecular weight of the component (a) has at least one or more peaks in the range of 1.5 or more and less than 2.5.

Component (b-2): A block copolymer that is a component in which the ratio of the peak molecular weight thereof to the peak molecular weight of the component (a) has at least one or more peaks in the range of 2.5 or more and less than 4.3.

The analysis conditions were the same as in (Measurement of weight average molecular weight (Mw) and molecular weight distribution (Mw/Mn) of block copolymer) above.

The inflection point of each peak-to-peak curve obtained from the above GPC was vertically divided, and the ratio of each divided area to the total area was defined as the area ratio of each of block copolymer components (a), (b-1), and (b-2), and the ratio (% by mass) of each of block copolymer components (a), (b-1), and (b-2) was determined.

In addition, the peak molecular weight of each of block copolymer components (a), (b-1), and (b-2) ((PMwA) of (a), (b-1), and (b-2)) was determined.

For each inflection point between peaks, peak division was carried out by fitting processing by Gaussian approximation using HLC-8320 waveform separation software, and the intersection of each peak was set as the inflection point.

(Calculation of micro-converted peak molecular weight (PMwB))

The peak molecular weight (PMwA) on the GPC chromatogram measured by the above method is in terms of polystyrene. The micro-converted peak molecular weight (PMwB) was determined by the following expression using the molecular weight correction value (DMw) of the conjugated diene monomer unit. When the conjugated diene monomer unit was butadiene, PMwB was calculated with DMw = 0.6. When the GPC chromatogram had a plurality of peaks, the micro-converted peak molecular weight (PMwB) was calculated for each peak.

```
Micro-converted peak molecular weight (PMwB) = PMwA

× ((TS/100) + (1 - (TS/100)) × DMw)
```

In addition, the micro-converted peak molecular weight of each of the block copolymer components (a), (b-1), and (b-2) ((PMwB) of (a), (b-1), and (b-2)) was determined.

(Calculation of mass proportion of block copolymer (D) having a structure containing two or more polymer blocks (A))

The number N of the polymer blocks (A) mainly composed of the vinyl aromatic monomer unit contained in the block copolymer was calculated for each of the peak-divided peaks on the GPC chromatogram described in (Measurement of mass proportions of components (a), (b-1), and (b-2) in block copolymer) above, based on the following expression.

```
Number N of polymer blocks (A) contained in the

block copolymer = PMwB × (BS/100)/BSPMw
```

A peak having a value of this number N of 1.6 or more was assumed to indicate the presence of two or more polymer blocks (A), and the sum of the area proportions of peaks having a value of this number N of 1.6 or more was defined as the mass proportion (% by mass) of the block copolymer (D) having a structure containing two or more polymer blocks (A).
The symbols in the expression are shown below.

BS: Mass proportion (% by mass) of the polymer block (A) mainly composed of the vinyl aromatic monomer unit in the block copolymer
PMwB: Micro-converted peak molecular weight of the block copolymer
BSPMw: Peak molecular weight of the polymer block (A)

(Measurement of 5% by mass toluene solution viscosity)

The 5% by mass toluene solution viscosity (mPa·s) of the block copolymer was measured using a Cannon-Fenske viscosity tube in a constant temperature bath controlled at a temperature of 25°C.

(Peak temperature and peak height of loss tangent (tanδ) of block copolymer)

A dynamic viscoelastic spectrum of the block copolymer was measured by the following method, and the peak temperature and peak height of the loss tangent (tanδ) were determined.
A block copolymer sheet formed to a thickness of 2 mm was punched out to a length of 20 mm and a width of 10 mm with the longitudinal side of the sheet as the MD direction to obtain a sample, and the sample was measured using a torsion type geometry of the apparatus ARES (manufactured by TA Instruments, Inc., trade name), under conditions of a strain (initial strain) of 0.5%, a frequency of 1 Hz, a measurement range of -100°C to 100°C, and a heating rate of 3°C/min.

(Content of magnesium element in block copolymer)

The amount of the metal in the block copolymer was measured by elemental analysis using inductively coupled plasma emission spectrometer (Inductivitycoupled plasm (ICP), "ICPS-7510" manufactured by Shimadzu Corporation).

(Content of calcium element in block copolymer)

The amount of the metal in the block copolymer was measured by elemental analysis using inductively coupled plasma emission spectrometer (Inductivitycoupled plasm (ICP), "ICPS-7510" manufactured by Shimadzu Corporation).

(Content of nitrogen in block copolymer)

The nitrogen content is the proportion of the mass of a nitrogen atom to the mass of a block copolymer.
The nitrogen content was calculated using TN-2100H manufactured by Mitsubishi Chemical Analytech Co., Ltd. according to the method described in 4. Chemiluminescence method of JIS K 2609: 1998, Crude petroleum and petroleum products-Determination of nitrogen content.

(Particle shape measurement of fine particle ground aggregate)

For a verification experiment purpose, an aggregate that was a mixture of No. 6 and No. 7 crushed stones produced from Miyama-cho, Hachioji-shi, Tokyo, a crushed sand produced from Ogura, Midori-ku, Sagamihara-shi, Kanagawa, a fine sand produced from Daiei-machi, Narita-shi, Chiba, and a stone powder produced from Oaza Kaminaguri, Hanno-shi, Saitama was ground using Turbo Mill Model M manufactured by Freund-Turbo Corporation. The measurement was carried out by a dry laser diffraction method using SALD-2300 manufactured by Shimadzu Corporation.
The median diameter D50 of the resulting fine particle ground aggregate was 23.6 $\mu$m (D10: 15.3 $\mu$m, D90: 48.8 $\mu$m).

[Production of block copolymer]

(Preparation of hydrogenation catalyst)

In Production Examples and Comparative Production Examples described later, a hydrogenation catalyst used in preparing a block copolymer was prepared by the following method.
A reaction vessel equipped with a stirring apparatus was purged with nitrogen, and 1 L of dried and purified cyclohexane was placed therein.
Next, 100 mmol of bis($\eta$5-cyclopentadienyl)titanium dichloride were added.
While sufficiently stirring this, a n-hexane solution containing 200 mmol of trimethylaluminum was added and reacted at room temperature for about 3 days to obtain a hydrogenation catalyst.

(Method for producing block copolymer of Production Examples 1 and 6)

Polymerization was carried out by the following method using a stirring apparatus having an internal volume of 100 L and a tank reactor equipped with a jacket.

<First stage>

The reactor was washed, dried, and purged with nitrogen, then 45 kg of cyclohexane was placed in the reactor, the temperature was adjusted to 50°C, then 1200 g of styrene was added as a monomer over 3 minutes, and then a n-butyllithium (hereinafter, indicated as nBL) cyclohexane solution was added in a pure amount of 4.0 g to start the reaction.

<Second stage>

Next, 5 minutes after the temperature in the reactor reached the maximum value, 5600 g of 1,3-butadiene was continuously supplied to the reactor at a constant rate over 20 minutes to react.

<Third stage>

Next, 5 minutes after the temperature in the reactor reached the maximum value, 1200 g of styrene was continuously supplied to the reactor at a constant rate over 3 minutes to react.

<Termination reaction>

After that, 5 minutes after the temperature in the reactor reached the maximum value, 1,3-dimethyl-2-imidazolidinone was added as a terminator to react for 20 minutes. The amount added was added batchwise such that the molar ratio to nBL was 1.0. Further, after completion of the reaction, ethanol was added batchwise such that the molar ratio to nBL was 1.0.

<Desolventization step>

After completion of the polymerization step, 0.25 parts by mass of a stabilizer (octadecyl-3-(3,5-di-t-butyl-4-hydroxyphenyl)propionate) was added per 100 parts by mass of the resulting block copolymer to obtain a polymer solution. After that, the solvent was removed by steam stripping at 95°C for 30 minutes to obtain block copolymer 1 (hereinafter also referred to as "polymer 1").

Here, for steam stripping, the magnesium-containing compound and the calcium-containing compound shown in Table 1 below were added to water in a steam stripping tank, the water temperature was controlled to 98°C by blowing steam, and steam stripping was carried out for 30 minutes.

Thereby, a block copolymer of Production Examples 1 and 6 was obtained.

The physical properties, structure, and composition of Production Examples 1 and 6 are shown in Table 1.

In Table 1, the block copolymer number is written as 1 because block copolymer 1 is used in both Production Examples 1 and 6.

(Method for producing block copolymer of Production Examples 2 and 7)

Reactions were carried out in the same manner as in the block copolymer 1, and the termination reaction, the hydrogenation reaction, and the desolventization reaction were carried out as follows.

<Termination reaction>

After that, 5 minutes after the temperature in the reactor reached the maximum value, ethanol was added as a terminator batchwise such that the molar ratio to nBL was 1.0.

<Hydrogenation reaction step>

The hydrogenation catalyst prepared as described above was added to the resulting polymer solution, and hydrogen was continuously supplied for 120 minutes while maintaining the temperature at 95°C to carry out a hydrogenation reaction. The amount of the catalyst added was added such that the weight ratio of Ti to the polymer was 100 ppm, and the hydrogen pressure in the hydrogenation and polymerization reactor was 0.95 MPa. In addition, the total amount of hydrogen supplied was 124 g.

<Desolventization step>

After completion of the polymerization step, 0.25 parts by mass of a stabilizer (octadecyl-3-(3,5-di-t-butyl-4-hydroxyphenyl)propionate) was added per 100 parts by mass of the resulting block copolymer to obtain a polymer solution. After that, the solvent was removed by steam stripping at 95°C for 30 minutes to obtain block copolymer 2 (hereinafter also referred to as "polymer 2") .

Here, for steam stripping, the magnesium-containing compound and the calcium-containing compound shown in Table 1 below were added to water in a steam stripping tank, the water temperature was controlled to 98°C by blowing steam, and steam stripping was carried out for 30 minutes.

Thereby, a block copolymer of Production Examples 2 and 7 was obtained.

The physical properties, structure, and composition of Production Examples 2 and 7 are shown in Table 1.

In Table 1, the block copolymer number is written as 2 because block copolymer 2 is used in both Production Examples 2 and 7.

(Method for producing block copolymer of Production Examples 3 and 8 and Comparative Production Examples 9, 10, 11, and 12)

The temperature in the <First stage> of the polymerization reaction was adjusted to 50°C, and then 0.55 mol of TMEDA was added per mol of nBL.

In the <Termination reaction>, 1,3-dimethyl-2-imidazolidinone was added as a terminator and reacted for 20 minutes. The amount added was added batchwise such that the molar ratio to nBL was 1.0. Further, after completion of the reaction, ethanol was added batchwise such that the molar ratio to nBL was 1.0.

The amount of hydrogen supplied in the <Hydrogenation reaction step> was changed to 193 g.

The other conditions were set to be the same as in the method for producing block copolymer 2 to obtain block copolymer 3 (hereinafter also referred to as "polymer 3").

Here, for steam stripping, the magnesium-containing compound and the calcium-containing compound shown in Table 1 below were added to water in a steam stripping tank, the water temperature was controlled to 98°C by blowing steam, and steam stripping was carried out for 30 minutes.

Thereby, a block copolymer of Production Examples 3 and 8 and Comparative Production Examples 9, 10, 11, and 12 was obtained.

The physical properties, structure, and composition of Production Examples 3 and 8 and Comparative Production Examples 9, 10, 11, and 12 are shown in Table 1.

In Table 1, the block copolymer number is written as 3 because block copolymer 3 is used in all of Production Examples 3 and 8 and Comparative Production Examples 9 to 12.

(Method for producing block copolymer of Production

Example 4)

The amount of styrene after the temperature in the <First stage> of the polymerization reaction was adjusted to 50°C was 600 g.

5 Minutes after the temperature in the <Second stage> of the polymerization reaction reached the maximum value, a mixture of 4800 g of 1,3-butadiene and 2000 g of styrene was continuously supplied to the reactor at a constant rate over 30 minutes.

5 Minutes after the temperature in the <Third stage> of the polymerization reaction reached the maximum value, 600 g of styrene was continuously supplied to the reactor at a constant rate over 3 minutes.

In the <Termination reaction>, 1,3-dimethyl-2-imidazolidinone was added as a terminator and reacted for 20 minutes. The amount added was added batchwise such that the molar ratio to nBL was 1.0.

The amount of hydrogen used in the <Hydrogenation reaction step> was 53 g.

The other conditions were set to be the same as in the method for producing block copolymer 2 of Production Example 2 described above to obtain block copolymer 4.

The physical properties, structure, and composition of Production Example 4 are shown in Table 1 below.

(Method for producing block copolymer of Production

Example 5)

Block copolymer 5 was obtained in the same manner as in the method for producing block copolymer 4 of Production Example 4 described above except that the amount of styrene in the <First stage> was 800 g, the amount of styrene in the <Second stage> was 1600 g, the amount of styrene in the <Third stage> was 800 g, and the amount of hydrogen used in the <Hydrogenation reaction step> was 107 g.

The physical properties, structure, and composition of Production Example 5 are shown in Table 1 below.

(Method for producing block copolymer of Production

Example 13)

Block copolymer 6 was obtained in the same manner as in the method for producing block copolymer 4 of Production Example 4 described above except that the amount of styrene in the <First stage> was 1650 g, the amounts of 1,3-butadiene and styrene in the <Second stage> was 4400 g and 300 g, respectively, the amount of styrene in the <Third stage> was 1650 g, and the amount of hydrogen used in the <Hydrogenation reaction step> was 81 g.

The physical properties, structure, and composition of Production Example 13 are shown in Table 1 below.

(Method for producing block copolymer of Production

Example 14)

Block copolymer 7 was obtained in the same manner as in the method for producing block copolymer 6 of Production Example 13 described above except that the amount of styrene in the <First stage> was 1400 g, the amount of styrene in the <Second stage> was 800 g, and the amount of styrene in the <Third stage> was 1400 g.

The physical properties, structure, and composition of Production Example 14 are shown in Table 1 below.

(Method for producing block copolymer of Production

Example 15)

Block copolymer 8 was obtained in the same manner as in the method for producing block copolymer 6 of Production Example 13 described above except that the amount of styrene in the <First stage> was 400 g, the amount of styrene in the <Second stage> was 2800 g, and the amount of styrene in the <Third stage> was 400 g.

The physical properties, structure, and composition of Production Example 15 are shown in Table 1 below.

(Method for producing block copolymer of Production

Example 16)

Block copolymer 9 was obtained in the same manner as in the method for producing block copolymer 4 of Production Example 4 described above except that the amount of styrene in the <First stage> was 800 g, the amounts of 1,3-butadiene and styrene in the <Second stage> was 5600 g and 800 g, respectively, the amount of styrene in the <Third stage> was 800 g, and the amount of hydrogen used in the <Hydrogenation reaction step> was 193 g.

The physical properties, structure, and composition of Production Example 16 are shown in Table 1 below.

In Table 1 below, the amount of styrene added in the second stage being 0 means that styrene was not added.

Modifying agent "A" shown in Table 1 means 1,3-dimethyl-2-imidazolidinone, and "0" means no addition.

EP 4 421 121 A1

[Table 1]

| | | Production Example 1 | Production Example 2 | Production Example 3 | Production Example 4 | Production Example 5 | Production Example 6 | Production Example 7 | Production Example 8 | Comparative Production Example 9 | Comparative Production Example 10 | Comparative Production Example 11 | Comparative Production Example 12 | Production Example 13 | Production Example 14 | Production Example 15 | Production Example 16 |
|---|---|---|---|---|---|---|---|---|---|---|---|---|---|---|---|---|---|
| | Block copolymer number | 1 | 2 | 3 | 4 | 5 | 1 | 2 | 3 | 3 | 3 | 3 | 3 | 6 | 7 | 8 | 9 |
| First stage | Styrene (g) | 1200 | 1200 | 1200 | 600 | 800 | 1200 | 1200 | 1200 | 1200 | 1200 | 1200 | 1200 | 1650 | 1400 | 400 | 800 |
| First stage | TMEDA(mol/Li) | 0 | 0 | 0.55 | 0.55 | 0.55 | 0 | 0 | 0.55 | 0.55 | 0.55 | 0.55 | 0.55 | 0.55 | 0.55 | 0.55 | 0.55 |
| First stage | nBL(g) | 4 | 4 | 4 | 4 | 4 | 4 | 4 | 4 | 4 | 4 | 4 | 4 | 4 | 4 | 4 | 4 |
| Second stage | Butadiene (g) | 5600 | 5600 | 5600 | 4800 | 4800 | 5600 | 5600 | 5600 | 5600 | 5600 | 5600 | 5600 | 4400 | 4400 | 4400 | 5600 |
| Second stage | Styrene (g) | 0 | 0 | 0 | 2000 | 1600 | 0 | 0 | 0 | 0 | 0 | 0 | 0 | 300 | 800 | 2800 | 800 |
| Third stage | Styrene (g) | 1200 | 1200 | 1200 | 600 | 800 | 1200 | 1200 | 1200 | 1200 | 1200 | 1200 | 1200 | 1650 | 1400 | 400 | 800 |
| Termination reaction | Modifying agent | A | 0 | A | A | A | A | 0 | A | A | A | A | A | A | A | A | A |
| Termination reaction | Amount added (mol/Li) | 1 | 0 | 1 | 1 | 1 | 1 | 0 | 1 | 1 | 1 | 1 | 1 | 1 | 1 | 1 | 1 |
| Termination reaction | Methanol (mol/Li) | 1 | 1 | 1 | 1 | 1 | 1 | 1 | 1 | 1 | 1 | 1 | 1 | 1 | 1 | 1 | 1 |
| Hydrogenation reaction | Amount of hydrogen added (g) | 0 | 124 | 193 | 53 | 107 | 0 | 124 | 193 | 193 | 193 | 193 | 193 | 81 | 81 | 81 | 193 |
| Desolventization | Magnesium chloride wt% in polymer | 0.027 | - | - | - | - | 0.055 | - | - | - | 0.121 | 0.055 | 0.055 | - | - | - | - |
| Desolventization | Magnesium sulfate wt% in polymer | - | 0.035 | 0.035 | 0.035 | 0.035 | - | 0.069 | 0.069 | - | - | - | - | 0.035 | 0.035 | 0.035 | 0.035 |
| Desolventization | Calcium stearate wt% in polymer | - | 0.379 | - | 0.379 | 0.379 | - | - | 0.606 | 0.379 | - | 1.121 | - | 0.379 | 0.379 | 0.379 | 0.379 |
| Desolventization | Calcium chloride wt% in polymer | 0.069 | - | 0.069 | - | - | 0.111 | 0.111 | - | - | - | - | - | - | - | - | - |
| Desolventization | Amount of Mg added (ppm) in polymer | 70 | 70 | 70 | 70 | 70 | 140 | 140 | 140 | 0 | 310 | 140 | 140 | 70 | 70 | 70 | 70 |
| Desolventization | Amount of Ca added (ppm) in polymer | 250 | 250 | 250 | 250 | 250 | 400 | 400 | 400 | 250 | 0 | 740 | 0 | 250 | 250 | 250 | 250 |
| Physical properties of polymer | TS (% by mass) | 30 | 30 | 30 | 40 | 40 | 30 | 30 | 30 | 30 | 30 | 30 | 30 | 45 | 45 | 45 | 30 |
| Physical properties of polymer | BS (% by mass) | 30 | 30 | 30 | 15 | 20 | 30 | 30 | 30 | 30 | 30 | 30 | 30 | 41 | 35 | 10 | 20 |
| Physical properties of polymer | 5% by mass toluene solution viscosity (mPa·s) | 12 | 16 | 20 | 8 | 17 | 13 | 17 | 21 | 19 | 19 | 19 | 20 | 23 | 20 | 16 | 19 |
| Physical properties of polymer | Nitrogen content (ppm) | 203 | 0 | 200 | 204 | 201 | 201 | 0 | 188 | 191 | 191 | 191 | 201 | 200 | 198 | 200 | 190 |

37

| | | | | | | | | | | | | | | | | |
|---|---|---|---|---|---|---|---|---|---|---|---|---|---|---|---|---|
| RS (% by mass) | 0 | 0 | 0 | 29 | 25 | 0 | 0 | 0 | 0 | 0 | 0 | 0 | 7 | 15 | 39 | 13 |
| Vinyl bond content (% by mass) | 10 | 10 | 32 | 30 | 30 | 11 | 11 | 30 | 29 | 29 | 29 | 30 | 30 | 29 | 30 | 28 |
| Hydrogenation rate (mol%) | 0 | 60 | 85 | 31 | 61 | 0 | 62 | 84 | 87 | 87 | 87 | 87 | 51 | 50 | 52 | 87 |
| tanδ peak temperature (°C) | -85 | -55 | -45 | -44 | -29 | -86 | -53 | -46 | -43 | -43 | -43 | -44 | -53 | -45 | -15 | -36 |
| tanδ peak height | 1 | 1 | 1 | 1 | 1 | 1 | 1 | 1 | 1 | 1 | 1 | 1 | 1 | 1 | 1 | 1 |
| Mw (×10,000) | 19 | 20 | 20 | 19 | 20 | 20 | 19 | 19 | 20 | 20 | 20 | 20 | 19 | 19 | 19 | 20 |
| Mn (×10,000) | 17 | 17 | 17 | 17 | 17 | 17 | 17 | 17 | 17 | 17 | 17 | 17 | 17 | 17 | 17 | 17 |
| Mw/Mn | 1 | 1 | 1 | 1 | 1 | 1 | 1 | 1 | 1 | 1 | 1 | 1 | 1 | 1 | 1 | 1 |
| PMwA (×10,000) | 20 | 20 | 20 | 20 | 20 | 21 | 20 | 20 | 20 | 20 | 20 | 20 | 20 | 20 | 20 | 20 |
| PMwA (×10,000) of (a) component | - | - | - | - | - | - | - | - | - | - | - | - | - | - | - | - |
| PMwA (×10,000) of (b-1) component | - | - | - | - | - | - | - | - | - | - | - | - | - | - | - | - |
| PMwA (×10,000) of (b-2) component | - | - | - | - | - | - | - | - | - | - | - | - | - | - | - | - |
| BSPMw (×10,000) | 2 | 2 | 2 | 1 | 1 | 2 | 2 | 2 | 2 | 2 | 2 | 2 | 3 | 3 | 1 | 1 |
| Ratio (% by mass) of (a) component | 0 | 0 | 0 | 0 | 0 | 0 | 0 | 0 | 0 | 0 | 0 | 0 | 0 | 0 | 0 | 0 |
| Ratio (% by mass) of (b-1) component | 0 | 0 | 0 | 0 | 0 | 0 | 0 | 0 | 0 | 0 | 0 | 0 | 0 | 0 | 0 | 0 |
| Ratio (% by mass) of (b-2) component | 0 | 0 | 0 | 0 | 0 | 0 | 0 | 0 | 0 | 0 | 0 | 0 | 0 | 0 | 0 | 0 |
| PMwB (×10,000) | 14 | 14 | 14 | 15 | 15 | 15 | 14 | 14 | 14 | 14 | 14 | 15 | 16 | 16 | 16 | 14 |
| PMwB (×10,000) of (a) component | - | - | - | - | - | - | - | - | - | - | - | - | - | - | - | - |
| PMwB (×10,000) of (b-1) component | - | - | - | - | - | - | - | - | - | - | - | - | - | - | - | - |
| PMwB (×10,000) of (b-2) component | - | - | - | - | - | - | - | - | - | - | - | - | - | - | - | - |
| Block copolymer (D) (% by mass) | 100 | 100 | 100 | 100 | 100 | 100 | 100 | 100 | 100 | 100 | 100 | 100 | 100 | 100 | 100 | 100 |

[Examples and Comparative Examples]

(Preparation of asphalt composition)

350 g of an asphalt (Straight Asphalt 60-80 (resin + asphaltene = 28.0%) manufactured by JX) was placed in a 750-mL metal can, and the metal can was sufficiently immersed in an oil bath at 180°C.

Next, a fine particle ground aggregate was added to the asphalt in a molten state at the proportion (parts by mass) shown in Table 3, and further next, each block copolymer of Production Examples 1 to 8 and 13 to 16, Comparative Production Examples 9 to 12 was placed little by little in the asphalt in a molten state at the proportion (parts by mass) shown in Table 3 below with stirring.

After each material was completely placed, asphalt compositions were prepared by stirring at a rotation speed of 3500 rpm for 120 minutes.

The blending compositions thereof and evaluation results of each asphalt composition measured by the measurement methods described later are shown in Table 3 below.

[Preparation of modified asphalt mixture]

93.6 parts by mass of a crushed stone mastic asphalt type aggregate having a particle size shown in Table 2 below was placed in a mixing machine having a capacity of 27 liters equipped with a heating apparatus, and dry mixed for 25 seconds.

Next, 6.4 parts by mass of each of the asphalt compositions of Examples and Comparative Examples produced by the above method was placed in the above mixing machine and finally mixed for 50 seconds to obtain a modified asphalt mixture.

The modified asphalt mixture obtained was a crushed stone mastic asphalt type asphalt mixture.

The total amount of the modified asphalt mixture was adjusted to 10 kg, and the mixing temperature was adjusted to 177°C for both dry mixing and final mixing.

The aggregates used were No. 6 and No. 7 crushed stones from Miyama-cho, Hachioji-shi, Tokyo, crushed sand produced from Ogura, Midori-ku, Sagamihara-shi, Kanagawa, fine sand produced from Daiei-machi, Narita-shi, Chiba, and a mixture of stone powders produced from Oaza Kaminaguri, Hanno-shi, Saitama.

The particle size distribution of the aggregates used in the modified asphalt mixtures is shown in Table 2 below.

The obtained modified asphalt mixtures were evaluated by the measurement method described later.

[Table 2]

| Sieve opening (mm) | Weight percentage (%) |
|---|---|
| 13.2 to 19.0 | 5.8 |
| 4.75 to 13.2 | 48.4 |
| 2.36 to 4.75 | 10.3 |
| 0.3 to 2.36 | 16 |
| 0.075 to 0.3 | 9.7 |
| 0 to 0.075 | 9.8 |

[Methods for evaluating asphalt composition and modified asphalt mixture]

The physical properties of the asphalt composition (indicated as Physical properties of As in Table 3) and the physical properties of the modified asphalt mixture (indicated as Physical properties of As mixture) were evaluated as follows.

(Compatibility (separability) of asphalt compositions)

The compatibility (separability) of the asphalt compositions was measured according to ASTM-D5976.

The asphalt compositions obtained in the Examples and the Comparative Examples were used as samples.

A Teflon (registered trademark) tube having a diameter of 2 cm and a length of 15 cm was filled with a sample, covered with a lid of aluminum foil, and then allowed to stand in an oven at 163°C for 48 hours. After that, the tube was allowed to stand overnight in a freezer, the sample was taken out from the Teflon (registered trademark) tube, divided into three equal parts, and the softening points at the top and the bottom were measured.

The smaller the difference between the measured softening point values of the upper part and the lower part, the better the compatibility, and ratings of ◎, ○, △, and ✕ were given in descending order of goodness according to the following criteria. It was considered that the performance was sufficient for practical use when the rating was △ or higher.

The method for measuring the softening point will be described later.

The evaluation criteria when the content of the block copolymer in the asphalt composition is 4% by mass are as follows.

<Evaluation criteria>

◎: The difference between the measured softening point values of the upper part and the lower part is 1°C or less
○: The difference between the measured softening point values of the upper part and the lower part is more than 1°C and 3°C or less
△: The difference between the measured softening point values of the upper part and the lower part is more than 3°C and 5°C or less
✕: The difference between the measured softening point values of the upper part and the lower part is more than 5°C

It was found that the compatibility tends to be improved by lowering the molecular weight, setting TS to 20 to 60% by mass, and RS to 3 to 50% by mass in the block copolymer. It was found that when TS or RS is outside the above range, the compatibility tends to worsen.

(Solubility in asphalt composition)

In the (Preparation of asphalt composition), 20 minutes after the start of stirring, the liquid level was visually checked.

If the dissolution is sufficient, the surface of the liquid during stirring is in a smooth state with no particulate state visible, indicating excellent solubility.

The evaluation criteria for solubility are as follows.

<Evaluation criteria>

○: The surface of the liquid is smooth.
△: The surface of the liquid is approximately smooth.
✕: An obvious particulate state is visible on the surface of the liquid.

(Dissolution stability of asphalt composition)

A part of the asphalt composition after the [Preparation of asphalt composition] was transferred to a 100-mL screw tube and allowed to stand at 200°C for one day. After that, the asphalt composition was removed from the screw tube, and then evaluation was made based on the amount of fine particles left at the bottom of the screw tube.

<Evaluation criteria>

○: There was only a little left.
△: Fine particles remained but did not agglomerate.
✕: A large amount of fine particles remained, or a large number of agglomerates were visible.

(Melt viscosity of asphalt composition)

The melt viscosity of the asphalt composition at 160°C was measured using a Brookfield type viscometer.

The asphalt compositions obtained in the Examples and the Comparative Examples were used as samples.

The lower the melt viscosity, the better the producibility, and ratings of ◎, ○, △, and ✕ were given in descending order of goodness according to the following criteria. It was considered that the performance was sufficient for practical use when the rating was △ or higher.

The evaluation criteria when the content of the block copolymer is 4% by mass are as follows.

<Evaluation criteria>

◎: The melt viscosity is 300 mPa·s or less
O: The melt viscosity is more than 300 mPa·s and 350 mPa·s or less
△: The melt viscosity is more than 350 mPa·s and 400 mPa·s or less
×: The melt viscosity is more than 400 mPa·s

It was found that the melt viscosity of the asphalt composition tends to be decreased by lowering the molecular weight and reducing the content of the vinyl aromatic monomer in the block copolymer. However, it was found that by doing so, in contrast, the softening point and the dynamic stability of the modified asphalt mixture tend to be decreased.

(Softening point of asphalt composition (ring & ball method))

The softening point of the asphalt composition was measured according to JIS-K2207.

The asphalt compositions obtained in the Examples and the Comparative Examples were used as samples.

When a specified ring was filled with a sample, supported horizontally in a glycerin solution, a 3.5-g ball was placed in the center of the sample, and the liquid temperature was raised at a rate of 5°C/min, the temperature when the sample touched the bottom plate of the ring stage under the weight of the ball (softening point) was measured.

The higher the softening point, the better, and ratings of ◎, ○, △, and × were given in descending order of goodness according to the following criteria.

It was considered that the performance was sufficient for practical use when the rating was △ or higher.

The evaluation criteria when the content of the block copolymer is 4% by mass are as follows.

<Evaluation criteria>

◎: The temperature (softening point) is 63°C or more
O: The temperature (softening point) is 60°C or more and less than 63°C
△: The temperature (softening point) is 56°C or more and less than 60°C
×: The temperature (softening point) is less than 56°C

It was found that the softening point of the asphalt composition tends to be improved by increasing the molecular weight, increasing the content of the vinyl aromatic monomer unit, and increasing the hydrogenation rate in the block copolymer. However, it was found that by doing so, in contrast, the compatibility with the asphalt is decreased and the melt viscosity of the asphalt composition is increased.

(Elongation recovery (elastic recovery) of asphalt composition after thermal degradation test)

RTFOT (Rolling Thin Film Oven Test) was carried out according to EN 12607-1.

The heating time was 240 minutes, and the asphalt composition after heating was used to carry out the measurement according to the method described in British Standards, BS EN 13398: 2010 / BS 2000-516: 2010.

The asphalt composition after heating prepared by the above method was poured into a jig to prepare a dumbbell-shaped specimen having grips at both ends. The dimensions of the specimen excluding the grips at both ends were 1 cm in thickness, 1 cm in width, and 3 cm in length. The grips of the specimen were set on the chucks of the tensile tester, the specimen was pulled at a rate of 5 cm/min from the state where the distance between the chucks was 3 cm in a water tank at 25°C, and stopped when elongated 20 cm from the initial length. The specimen was allowed to stand in the water tank at 25°C for 10 seconds with the specimen sandwiched between the chucks, and then the specimen was cut at the center. After that, the cut specimens were left in the water tank at 25°C for 30 minutes, the sum $\alpha$ (cm) of the lengths of the portions excluding the grips of both specimens was measured, and the proportion calculated by the following expression (VI) was defined as elongation recovery (%).

$$\text{Elongation recovery (\%)} = \{3(cm) + 20(cm) - \alpha(cm)/20(cm)\}$$

$$\times 100 \ldots (VI)$$

Higher elongation recovery indicates better crack resistance.

The evaluation criteria when the content of the block copolymer in the asphalt composition is 4% by mass are as follows.

<Evaluation criteria>

◎: The elongation recovery is 80% or more
O: The elongation recovery is 70% or more and less than 80%
△: The elongation recovery is 60% or more and less than 70%
×: The elongation recovery is less than 60%

It was found that the elongation recovery of the asphalt composition tends to be improved by increasing the molecular weight and increasing the content of the vinyl aromatic monomer unit in the block copolymer. However, it was found that by doing so, in contrast, the viscosity tends to be increased to decrease the processability.

(Heat resistance (elastic recovery maintenance rate) of asphalt composition)

RTFOT (Rolling Thin Film Oven Test) was carried out according to EN 12607-1.

The heating time was 240 minutes, the asphalt composition was heated, and the elastic recovery of the asphalt composition was measured before and after the heating to determine the maintenance rate.

$$\text{Maintenance rate} = (\text{elastic recovery after}$$

$$\text{heating/elastic recovery before heating})$$

The higher the maintenance rate, the better the heat resistance, the better the long-term storage stability of the asphalt composition, and the longer the life of the road construction using the mixture, and thus ratings of ◎, O, △, and × were given in descending order of goodness according to the following criteria.

It was considered that the performance was sufficient for practical use when the rating was △ or higher.

The evaluation criteria when the content of the block copolymer in the asphalt composition is 4% by mass are as follows.

<Evaluation criteria>

◎: The maintenance rate is 90% or more
O: The maintenance rate is 85% or more and less than 90%
△: The maintenance rate is 80% or more and less than 85%
×: The maintenance rate is less than 80%

It was found that the elastic recovery maintenance rate tends to be improved by increasing the hydrogenation rate in the block copolymer. However, it was found that by doing so, in contrast, the viscosity of the asphalt composition tends to be increased to decrease the processability.

(Low temperature elongation of asphalt composition)

The low temperature elongation of the asphalt composition was measured according to JIS-K2207.

The asphalt compositions obtained in the Examples and the Comparative Examples were used as samples.

When a sample was poured into a shape frame, shaped into a specified shape, then kept at 5°C in a constant temperature water bath, and next pulled at a speed of 5 cm/min, the distance (elongation) at the point where the sample was elongated to be cut was measured. The higher the elongation of the asphalt composition, the better the low temperature crack resistance, and ratings of ◎, O, △, and × were given in descending order of goodness according to the following criteria. It was considered that the performance was sufficient for practical use when the rating was △ or higher.

The evaluation criteria when the content of the block copolymer in the asphalt composition is 4% by mass are as follows.

<Evaluation criteria>

◎: The elongation is 45 cm or more
O: The elongation is 40 cm or more and less than 45 cm
△: The elongation is 35 cm or more and less than 40 cm
×: The elongation is less than 35 cm

It was found that the low temperature elongation of the asphalt composition tends to be improved by decreasing the content of the vinyl aromatic monomer unit in the block copolymer. However, it was found that by doing so, in contrast, the softening point of the asphalt composition and the dynamic stability of the modified asphalt mixture tend to be decreased.

(Dynamic stability (DS) of modified asphalt mixture)

The dynamic stability (DS) of the modified asphalt mixture was measured by a wheel tracking test. The modified asphalt mixture prepared as described above was used as a test body.
The wheel tracking test was carried out according to Test Method Handbook B003.
A small loaded rubber wheel was run repeatedly back and forth on a test body having predetermined dimensions at a specified temperature, for a specified time, and at a specified rate, and the dynamic stability (DS) (times/mm) was determined from the amount of deformation per unit time.
Higher dynamic stability indicates that better rutting resistance can be given. Ratings of ◎, ○, △, and × were given in descending order of goodness according to the following criteria. It was considered that the performance was sufficient for practical use when the rating was △ or higher.
The evaluation criteria when the content of the block copolymer in the asphalt composition constituting the modified asphalt mixture is 4% by mass are as follows.

<Evaluation criteria>

◎: The dynamic stability (DS) is 2000 times/mm or more
O: The dynamic stability (DS) is 1500 times/mm or more and less than 2000 times/mm
△: The dynamic stability (DS) is 1000 times/mm or more and less than 1500 times/mm
×: The dynamic stability (DS) is less than 1000 times/mm

It was found that the dynamic stability of the modified asphalt mixture tends to be improved by increasing the molecular weight, increasing the hydrogenation rate, and increasing the content of the vinyl aromatic monomer unit in the block copolymer. However, it was found that by doing so, in contrast, the compatibility with the asphalt tends to be decreased and the melt viscosity of the asphalt composition tends to be increased.

(Water resistance of modified asphalt mixture)

The water resistance of the modified asphalt mixture was measured by a water immersion wheel tracking test.
The modified asphalt mixture prepared as described above was used as a test body.
The water immersion wheel tracking test was carried out according to Test Method Handbook B004.
A small, loaded rubber wheel was repeatedly run back and forth on a test body having predetermined dimensions at a specified temperature, for a specified time, and at a specified speed, the asphalt mixture specimen was divided into parts after the test, and the stripping of the asphalt in the cross section was visually checked to determine the stripped area ratio.

A lower stripped area ratio indicates that superior water resistance can be imparted. Ratings of ◎, ○, △, and × were given in descending order of goodness according to the following criteria. It was considered that the performance was sufficient for practical use when the rating was △ or higher.

The evaluation criteria when the content of the block copolymer in the asphalt composition constituting the modified asphalt mixture is 4% by mass are as follows.

<Evaluation criteria>

◎: The stripped area ratio is 20 or less

O: The stripped area ratio is more than 2% and 3% or less

△: The stripped area ratio is more than 3% and 5% or less

×: The stripped area ratio is more than 5%

[Table 3]

| Number of Production Example or Comparative Production Example used | | Production Example | Production Example | Production Example | Production Example | Production Example | Production Example | Production Example | Production Example | Production Example | Production Example | Production Example | Production Example | Comparative Production Example | Comparative Production Example | Comparative Production Example | Comparative Production Example |
|---|---|---|---|---|---|---|---|---|---|---|---|---|---|---|---|---|---|
| | | 1 | 2 | 3 | 4 | 5 | 6 | 7 | 8 | 13 | 14 | 15 | 16 | 9 | 10 | 11 | 12 |
| Asphalt composition, modified asphalt mixture | | Example | Example | Example | Example | Example | Example | Example | Example | Example | Example | Example | Example | Comparative Example | Comparative Example | Comparative Example | Comparative Example |
| | | 1 | 2 | 3 | 4 | 5 | 6 | 7 | 8 | 9 | 10 | 11 | 12 | 1 | 2 | 3 | 4 |
| Asphalt composition, modified asphalt mixture (parts by mass) | Asphalt 60-80 (asphaltene + resin = 28.0) manufactured by JX | 96 | 96 | 96 | 96 | 96 | 96 | 96 | 96 | 96 | 96 | 96 | 96 | 96 | 96 | 96 | 96 |
| | Production Example 1 | 4 | | | | | | | | | | | | | | | |
| | Production Example 2 | | 4 | | | | | | | | | | | | | | |
| | Production Example 3 | | | 4 | | | | | | | | | | | | | |
| | Production Example 4 | | | | 4 | | | | | | | | | | | | |
| | Production Example 5 | | | | | 4 | | | | | | | | | | | |
| | Production Example 6 | | | | | | 4 | | | | | | | | | | |
| | Production Example 7 | | | | | | | 4 | | | | | | | | | |
| | Production Example 8 | | | | | | | | 4 | | | | | | | | |
| | Production Example 13 | | | | | | | | | 4 | | | | | | | |
| | Production Example 14 | | | | | | | | | | 4 | | | | | | |
| | Production Example 15 | | | | | | | | | | | 4 | | | | | |
| | Production Example 16 | | | | | | | | | | | | 4 | | | | |
| | Comparative Production Example 9 | | | | | | | | | | | | | 4 | | | |
| | Comparative Production Example 10 | | | | | | | | | | | | | | 4 | | |
| | Comparative Production Example 11 | | | | | | | | | | | | | | | 4 | |
| | Comparative Production Example 12 | | | | | | | | | | | | | | | | 4 |

| | Fine particle ground aggregate | 1 | 1 | 1 | 1 | 1 | 1 | 1 | 1 | 1 | 1 | 1 | 1 | 1 | 1 | 1 | 1 |
|---|---|---|---|---|---|---|---|---|---|---|---|---|---|---|---|---|---|
| Physical properties of As | Compatibility | ○ | ○ | ○ | △ | ○ | ◎ | ○ | △ | ○ | ○ | △ | ○ | ◎ | ○ | ○ | △ |
| | Solubility | × | △ | × | × | ○ | ○ | ○ | ○ | △ | ○ | ○ | ○ | ○ | ○ | ○ | ○ |
| | Dissolution stability | × | △ | × | × | ○ | ○ | ○ | ○ | △ | ○ | ○ | ○ | ○ | ○ | △ | ○ |
| | Melt viscosity | ○ | ○ | ○ | △ | ○ | △ | ○ | ○ | ○ | △ | ○ | △ | ○ | ○ | △ | ○ |
| | Softening point | ○ | ○ | ○ | ◎ | ○ | ○ | ○ | △ | △ | ○ | △ | ◎ | △ | △ | ○ | △ |
| | Elongation recovery | ○ | ○ | ○ | ◎ | ○ | △ | ○ | △ | △ | ○ | △ | ◎ | △ | △ | ◎ | △ |
| | Heat resistance (elastic recovery maintenance rate) | ○ | × | × | ◎ | ◎ | ◎ | ◎ | ◎ | ○ | ◎ | ○ | ◎ | ○ | ○ | ◎ | ○ |
| | Low temperature elongation | ○ | × | ○ | △ | △ | △ | ○ | ◎ | ◎ | ○ | ◎ | △ | ○ | ◎ | ○ | ◎ |
| Physical properties of As mixture | DS | ○ | ○ | ○ | △ | ○ | △ | ○ | ○ | ○ | ○ | △ | ○ | ○ | ○ | ○ | △ |
| | Water resistance | ○ | ○ | ○ | △ | ○ | ○ | ○ | ○ | ○ | ○ | △ | ○ | ○ | ○ | ○ | △ |

Industrial Applicability

The block copolymer of the present invention has industrial applicability as a modifier for an asphalt composition in applications such as road pavement, a waterproofing sheet, or roofing and can be particularly suitably used in the field of road pavement.

**Claims**

1. A block copolymer (P) comprising a polymer block (A) mainly composed of a vinyl aromatic monomer unit and a polymer block (B) mainly composed of a conjugated diene monomer unit, the block copolymer (P) satisfying the following <condition (1)> to <condition (3)>:

   <Condition (1)>
   a 5% by mass toluene solution viscosity at 25°C is 5 mPa·s or more and 45 mPa·s or less;
   <Condition (2)>
   a content of a magnesium element is 1 to 200 ppm;
   <Condition (3)>
   a content of a calcium element is 100 to 500 ppm.

2. The block copolymer (P) according to claim 1, wherein
   the block copolymer is a hydrogenated product.

3. The block copolymer (P) according to claim 1, wherein
   a mass proportion (TS) of the vinyl aromatic monomer unit is 20% by mass or more and 60% by mass or less.

4. The block copolymer (P) according to claim 1, wherein
   a vinyl bond content derived from a conjugated diene is 9% by mass or more and 50% by mass or less.

5. The block copolymer (P) according to claim 1, wherein
   a mass proportion (BS) of the polymer block (A) calculated by the following expression (I) is 10% by mass or more and 40% by mass or less:

$$BS = (mass\ of\ polymer\ block\ (A)/mass\ of\ block\ copolymer\ (P)) \times 100 \quad (I).$$

6. The block copolymer (P) according to claim 1, wherein

   the polymer block (B) is a polymer block (C) consisting of the vinyl aromatic monomer unit and the conjugated diene monomer unit, and
   a mass proportion (RS) of the vinyl aromatic monomer unit in the polymer block (C) calculated by the following expression (II) is 3% by mass or more and less than 50% by mass:

$$RS = (TS - BS)/(100 - BS) \times 100 \quad (II)$$

   wherein TS represents a mass proportion of the vinyl aromatic monomer unit in the block copolymer (P), and BS represents a mass proportion of the polymer block (A) in the block copolymer (P).

7. The block copolymer (P) according to claim 1, wherein

   the block copolymer is a hydrogenated product,
   the polymer block (B) is a polymer block (C) consisting of the vinyl aromatic monomer unit and the conjugated diene monomer unit, and
   a mass proportion (RS) of the vinyl aromatic monomer unit in the polymer block (C) calculated by the following expression (II) is 3% by mass or more and less than 50% by mass:

$$RS = (TS - BS)/(100 - BS) \times 100 \quad (II)$$

wherein TS represents a mass proportion of the vinyl aromatic monomer unit in the block copolymer (P), and BS represents a mass proportion of the polymer block (A) in the block copolymer (P).

8. The block copolymer (P) according to claim 1, wherein
a weight average molecular weight is 50,000 or more and 500,000 or less.

9. The block copolymer (P) according to claim 1, wherein
a separability according to ASTM D5976 in a mixture of 4 parts by mass of the block copolymer (P) and 96 parts by mass of an asphalt in which in composition analysis of the asphalt according to a TLC-FID JPI method (JPI-5S-70), per 100% by mass in total of a saturate, an aromatic, a resin, and an asphaltene, a total amount of the resin and the asphaltene is 30% by mass or more is 5°C or less.

10. The block copolymer (P) according to claim 1, wherein
a hydrogenation rate of a double bond in the conjugated diene monomer unit is 95 mol% or less.

11. The block copolymer (P) according to claim 1, wherein
a hydrogenation rate of a double bond in the conjugated diene monomer unit is 10 mol% or more.

12. An asphalt composition comprising:

100 parts by mass of an asphalt; and
0.5 parts by mass or more and 30 parts by mass or less of the block copolymer (P) according to any one of claims 1 to 11.

13. An asphalt composition comprising:

100 parts by mass of an asphalt; and
0.5 parts by mass or more and 30 parts by mass or less of the block copolymer (P) according to any one of claims 1 to 11, wherein
in composition analysis of the asphalt according to a TLC-FID JPI method (JPI-5S-70), per 100% by mass in total of a saturate, an aromatic, a resin, and an asphaltene, a total amount of the resin and the asphaltene is 30% by mass or more.

14. The asphalt composition according to claim 12, wherein
the asphalt composition comprises 0.01 to 10 parts by mass of a crosslinking agent per 100 parts by mass of the asphalt.

15. The asphalt composition according to claim 12, wherein
the asphalt composition comprises 0.05 to 10 parts by mass of an additive comprising sulfur and silicon per 100 parts by mass of the asphalt.

16. A modified asphalt mixture comprising:

3 parts by mass or more and 15 parts by mass or less of the asphalt composition according to claim 12; and
100 parts by mass of an aggregate.

Europäisches
Patentamt

European
Patent Office

Office européen
des brevets

# EUROPEAN SEARCH REPORT

**Application Number**

EP 24 15 7707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 837 748 A (WEIFANG XINGYUAN WATERPROOF MAT CO LTD) 4 June 2019 (2019-06-04) * example 4 * | 1-16 | INV. C08L53/02 C08L95/00 |
| A | US 5 437 923 A (KALKANOGLU HUSNU M [US]) 1 August 1995 (1995-08-01) * claim 1; examples 3,4,6 * | 1-16 | |

**TECHNICAL FIELDS SEARCHED (IPC)**

C08L

The present search report has been drawn up for all claims

| Place of search | Date of completion of the search | Examiner |
|---|---|---|
| Munich | 26 June 2024 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7707

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | Publication date |
|---|---|---|---|---|
| CN 109837748 | A | 04-06-2019 | NONE | |
| US 5437923 | A | 01-08-1995 | NONE | |

EPO FORM P0459

For more details about this annex : see Official Journal of the European Patent Office, No. 12/82

**REFERENCES CITED IN THE DESCRIPTION**

**Patent documents cited in the description**

- JP 9012898 A
- JP 2004059781 A
- JP 3619286 B
- JP 4317979 B
- JP 46032415 A
- JP 49036957 A
- JP 48002423 A
- JP 48004106 A
- JP 56028925 A
- JP 59166518 A
- JP 60186577 A
- JP 428704 A
- JP 436636 A
- JP 63004841 A
- JP 1037970 A
- JP 1053851 A
- JP 2009041 A
- JP 8109219 A

**Non-patent literature cited in the description**

- **I.M. KOLTHOFF.** *J. Polym. Sci.,* 1946, vol. 1, 429
- **I. M. KOLTHOFF et al.** *J. Polym. Sci.,* 1946, vol. 1, 429